# EUROPÄISCHE PATENTSCHRIFT

(11) **EP 4 562 725 B1**
(45) Veröffentlichungstag und Bekanntmachung des Hinweises auf die Patenterteilung: **16.09.2026**
(21) Anmeldenummer: 23739604.9
(22) Anmeldetag: 13.07.2023
(51) Int. Cl.: H02H 3/16, H02H 11/00, H02H 3/087

(54) **GLEICHSPANNUNGSSCHALTGERÄT UND SCHALTVORRICHTUNG INSBESONDERE ZUR ERDSCHLUSSERKENNUNG WÄHREND EINES EINSCHALTVORGANGS ZUM EINSCHALTEN EINER ANGESCHLOSSENEN GLEICHSPANNUNGSLAST SOWIE EIN VERFAHREN ZUM BETREIBEN DES GLEICHSPANNUNGSSCHALTGERÄTS BZW. DER SCHALTVORRICHTUNG**
DC SWITCHGEAR AND SWITCH DEVICE, IN PARTICULAR FOR EARTH FAULT DETECTION DURING A SWITCH-ON PROCESS FOR SWITCHING ON A CONNECTED DC LOAD, AND METHOD FOR OPERATING THE DC SWITCHGEAR OR THE SWITCH DEVICE
APPAREIL DE COUPURE DE TENSION CONTINUE ET DISPOSITIF DE COMMUTATION, EN PARTICULIER POUR LA DÉTECTION DE DÉFAUT À LA TERRE PENDANT UN PROCESSUS DE MISE EN CIRCUIT POUR LA MISE SOUS TENSION D'UNE CHARGE DE TENSION CONTINUE RACCORDÉE, ET PROCÉDÉ POUR FAIRE FONCTIONNER UN APPAREIL DE COUPURE DE TENSION CONTINUE OU UN APPAREIL DE COUPURE DE TENSION CONTINUE DISPOSITIF DE COMMUTATION

(30) Priorität: 28.07.2022 LU 502584
(43) Veröffentlichungstag der Anmeldung: 04.06.2025
(73) Patentinhaber: PHOENIX CONTACT GMBH & CO. KG, 32825 Blomberg (DE)
(72) Erfinder: GROTE, Tobias, 32676 Lügde (DE); HEUER, Lutz, 32825 Blomberg (DE); SCHÜRGENS, Detlev, 32825 Blomberg (DE); PLEWKA, Dirk, 33039 Nieheim (DE)
(74) Vertreter: Blumbach · Zinngrebe Patentanwälte PartG mbB
(86) Internationale Anmeldenummer: PCT/EP2023/069512
(87) Internationale Veröffentlichungsnummer: WO 2024/022840

(56) Entgegenhaltungen:
- EP-A2- 0 973 239
- DE-A1- 102020 216 405
- US-A1- 2022 146 595

## Beschreibung

Die vorliegende Erfindung betrifft ein Gleichspannungsschaltgerät und eine Schaltvorrichtung, die jeweils zum Erkennen eines Erdschlusses während eines Einschaltvorgangs zum Einschalten einer angeschlossenen Gleichspannungslast ausgebildet sind. Ferner betrifft die Erfindung ein Verfahren zum Betreiben eines solchen Gleichspannungsschaltgeräts sowie ein Verfahren zum Betreiben einer solchen Schaltvorrichtung.

Aus der DE 10 2019 203 977 A1 ist eine Schutzschalteinrichtung zum Koppeln eines Gleichspannungsabzweiges mit einem Plus- und einem Minusleiter an einen Gleichspannungsbus bekannt, wobei an die Schutzschalteinrichtung ein Gerät angeschlossen ist.

Ferner sind Schaltgeräte zur Erdschlusserkennung in Gleichspannungsnetzwerken auch aus US 2022/146595 und EP 0973239 bekannt.

Der vorliegenden Erfindung liegt die Aufgabe zugrunde, ein Gleichspannungsschaltgerät, eine Schaltvorrichtung und ein Verfahren zur Verfügung zu stellen, die jeweils ein zuverlässiges und sicheres Einschalten einer Gleichspannungslast ermöglichen.

Ein Kerngedanke der Erfindung kann darin gesehen werden, insbesondere einen auf der Ausgangsseite eines Gleichspannungsschaltgeräts vorliegenden Erdschluss frühzeitig, während eines Einschaltvorgangs zum Einschalten einer zuvor angeschlossenen Gleichspannungslast, zu erkennen, sodass es zu keinem größeren Verschleiß bzw. zu keiner Beschädigung der entsprechenden elektrischen Bauteile des Gleichspannungsschaltgeräts kommt. Das Merkmal "während eines Einschaltvorgangs zum Einschalten einer Gleichspannungslast" ist insbesondere dahingehend zu verstehen, dass eine an das Gleichspannungsschaltgerät ausgangsseitig angeschlossene Gleichspannungslast noch nicht eingeschaltet ist. Mit anderen Worten: Die Gleichspannungslast wird erst wirksam eingeschaltet, wenn während des Einschaltvorgangs kein Erdschluss erkannt worden ist. Folglich umfasst der Einschaltvorgang ein Überprüfen dahingehend, ob ein Erdschluss auf der Ausgangsseite eines Gleichspannungsschaltgeräts vorliegt, und beginnt insbesondere mit diesem Überprüfen.

Die Lösung der Erfindung ist durch einen Gegenstand mit den Merkmalen der unabhängigen Ansprüche wiedergegeben. Vorteilhafte Ausgestaltungen und Weiterentwicklungen sind Gegenstand der weiteren Merkmale der Unteransprüche. Dementsprechend betrifft zumindest eine Lösung gemäß der Erfindung ein Gleichspannungsschaltgerät, zur Erdschlusserkennung während eines Einschaltvorgangs zum Einschalten einer angeschlossenen Gleichspannungslast, umfassend einen ersten und einen zweiten Eingangsanschluss, die zum Anlegen einer externen Gleichspannung ausgebildet sind, einen ersten und einen zweiten Ausgangsanschluss, die zum elektrischen Anschließen der Gleichspannungslast ausgebildet sind, einen Plusleiter, der zwischen dem ersten Eingangsanschluss und dem ersten Ausgangsanschluss verläuft, sowie einen Minusleiter, der zwischen dem zweiten Eingangsanschluss und dem zweiten Ausgangsanschluss verläuft. Ferner umfasst das Gleichspannungsschaltgerät ein erstes halbleiterbasiertes, ansteuerbares Schaltelement, eine Strommesseinrichtung, einen ersten elektromechanischen Schalter und einen zweiten elektromechanischen Schalter, eine elektrisch zu- und abschaltbare Vorladeschaltung, welche eine Strombegrenzungseinrichtung umfasst, und eine Steuer- und Auswerteeinrichtung. Die Strommesseinrichtung, das erste Schaltelement und der erste elektromechanische Schalter sind in dem Plusleiter oder in dem Minusleiter angeordnet, während der zweite elektromechanische Schalter in dem jeweils anderen Leiter angeordnet ist. Die Steuer- und Auswerteeinrichtung ist dazu eingerichtet, zu Beginn eines Einschaltvorgangs des Gleichspannungsschaltgeräts, zu dem eine externe Gleichspannung an die Eingangsanschlüsse angelegt ist, eine Gleichspannungslast an die Ausgangsanschlüsse elektrisch angeschlossen ist, sich das erste Schaltelement und der erste und zweite elektromechanische Schalter jeweils in einem geöffneten, d.h. elektrisch nicht leitenden, Zustand befinden und die Vorladeschaltung abgeschaltet ist, nur das Schließen des ersten elektromechanischen Schalters zu veranlassen, anschließend das elektrische Zuschalten der Vorladeschaltung parallel zu dem ersten Schaltelement zu veranlassen, einen von der Strommesseinrichtung im Plusleiter oder im Minusleiter erfassten Stromfluss zum Erkennen eines Erdschlusses auszuwerten, und im Falle eines erkannten Erdschlusses des Plusleiters oder des Minusleiters das Abbrechen des Einschaltvorgangs des Gleichspannungsschaltgeräts zu veranlassen. Durch das Abbrechen des Einschaltvorgangs wird somit verhindert, dass ein Einschalten der angeschlossenen Gleichspannungslast erfolgt.

Die Gleichspannungsquelle ist insbesondere dazu vorgesehen, eine Gleichspannung von bis zu 1500 V bereitzustellen. Gleichspannungen in diesem Bereich werden auch als Niederspannung bezeichnet. Als Gleichspannung kann insbesondere eine Spannung vorgesehen sein, die größer als eine Gleichspannung in der Höhe von 120 V, d.h. größer als die sog. Kleinspannung, ist. Insbesondere kann eine Gleichspannung zwischen 400 V und 800V von der Gleichspannungsquelle bereitgestellt werden.

Das zuvor beschriebene Gleichspannungsschaltgerät ermöglicht es, während des Einschaltvorgangs und insbesondere vor Abschluss oder Beendigung des Einschaltvorgangs, d.h. bevor die Gleichspannungslast mittels des Gleichspannungsschaltgeräts eingeschaltet ist, einen potentiellen Erdschluss auf der Ausgangsseite des Gleichspannungsschaltgeräts zu erkennen, indem die Steuer- und Auswerteeinrichtung des Gleichspannungsschaltgeräts eine festgelegte, vorzugsweise in der Steuer- und Auswerteeinrichtung gespeicherte, Einschaltsequenz durchläuft bzw. vorbestimmte Schritte in vorbestimmter Reihenfolge im Rahmen des Einschaltvorgangs durchführt. So veranlasst die Steuer- und Auswerteeinrichtung ausgehend von einem Zustand, bei welchem sich sämtliche Schalteinrichtungen des Gleichspannungsschaltgeräts, d.h. das erste Schaltelement und die zwei elektromechanischen Schalter, in einem geöffneten bzw. nicht elektrisch leitenden Zustand befinden, dass zunächst nur der erste der beiden elektromechanischen Schalter geschlossen und somit elektrisch leitend wird und anschließend die Vorladeschaltung aktiviert bzw. parallel zu zumindest dem ersten Schaltelement, und optional auch parallel zu weiteren elektrischen Bauteilen, zugeschaltet wird. Daraufhin erfolgt eine Strommessung durch die Strommesseinrichtung und eine Auswertung des erfassten Stroms durch die Steuer- und Auswerteeinrichtung. Wird anhand des ausgewerteten Stromflusses ein Erdschluss des Plusleiters oder des Minusleiters erkannt, so veranlasst die Steuer- und Auswerteeinrichtung ein Abbrechen des Einschaltvorgangs des Gleichspannungsschaltgeräts, um eine Belastung und insbesondere Beschädigung der elektrischen Bauteile des Gleichspannungsschaltgeräts infolge eines durch den Erdschluss bedingten hohen Stromflusses zu vermeiden. Ferner kann die Steuer- und Auswerteeinrichtung optional auch den Erdschluss als vorliegenden Fehler anzeigen oder melden. Das Abbrechen des Einschaltvorgangs infolge eines erkannten Erdschlusses führt somit dazu, dass der Einschaltvorgang nicht beendet wird und die Gleichspannungslast somit nicht eingeschaltet wird.

Die in dem Gleichspannungsschaltgerät integrierte Vorladeschaltung kann vorteilhafterweise dazu verwendet werden, um auf einfache Weise und insbesondere ohne bzw. zumindest ohne wesentlichen zusätzlichen schaltungstechnischen Mehraufwand während des Einschaltvorgangs des Gleichspannungsschaltgeräts einen Erdschluss auf dessen Ausgangsseite zu erkennen. Hierzu wird die Vorladeschaltung auf die zuvor beschriebene Weise zu einem bestimmten Zeitpunkt bzw. in einem bestimmten Zustand des Gleichspannungsschaltgeräts aktiviert bzw. zugeschaltet, sodass mittels der Steuer- und Auswerteeinrichtung basierend auf dem von der Strommesseinrichtung erfassten Stromfluss darauf geschlossen werden kann, ob ein Erdschluss des Plusleiters oder des Minusleiters vorliegt. Liegt ein Erdschluss vor, so wird der Stromfluss durch die Strombegrenzungseinrichtung der Vorladeschaltung reduziert, um insbesondere den ersten elektromechanischen Schalter sowie gegebenenfalls auch eine infolge des Erdschlusses angeschlossene Gleichspannungslast vor hohen Strömen und somit vor einer Beschädigung zu schützen. Die Strombegrenzungseinrichtung kann beispielsweise zumindest einen ohmschen Widerstand oder zumindest einen Tiefsetzsteller aufweisen.

Beispielsweise kann die Steuer- und Auswerteeinrichtung gemäß einer erfindungsgemäßen Weiterentwicklung dazu eingerichtet sein, einen Erdschluss des Plusleiters oder des Minusleiters durch ein Überschreiten eines von der Strommesseinrichtung erfassten Stromflusses von einen Referenzwert von im Wesentlichen null Ampere zu erkennen. Wird zu Beginn eines Einschaltvorgangs nur der erste elektromechanische Schalter zum Schließen verlasst, so gibt es bei elektrisch angeschlossener Gleichspannungslast aufgrund des noch geöffneten zweiten elektromechanischen Schalters keinen geschlossenen Stromkreis, sofern kein Erdschluss vorliegt. Folglich sollte die Strommesseinrichtung keinen Stromfluss bzw. einen Stromfluss von im wesentlichen null Ampere messen. Liegt hingegen ein Erdschluss des Plusleiters oder des Minusleiters auf der Ausgangsseite des Gleichspannungsschaltgeräts vor, so kommt es infolgedessen zu einem geschlossenen Stromkreis und zu einem Stromfluss, welcher durch die Strombegrenzungseinrichtung der Vorladeschaltung begrenzt wird und von der Strommesseinrichtung erfasst wird. Folglich erkennt die Steuer- und Auswerteeinrichtung in einem von der Strommesseinrichtung erfassten Stromfluss, der den Referenzwert von im Wesentlichen null Ampere überschreitet, einen Erdschluss des Plusleiters oder des Minusleiters.

In einer Weiterentwicklung ist die Vorladeschaltung des Gleichspannungsschaltgeräts zum Aufladen von Kapazitäten auf der Ausgangsseite des Gleichspannungsschaltgeräts eingerichtet, wenn sich das Gleichspannungsschaltgerät in einem Zustand befindet, in welchem die Vorladeschaltung elektrisch zugeschaltet ist und der erste und zweite elektromechanische Schalter geschlossen sind.

Die Steuer- und Auswerteeinrichtung des Gleichspannungsschaltgeräts kann ferner dazu eingerichtet sein, das Abbrechen des Einschaltvorgangs zu veranlassen, indem sie das elektrische Abschalten der Vorladeschaltung und dann das Öffnen des ersten elektromechanischen Schalters veranlasst.

Darüber hinaus kann die Steuer- und Auswerteeinrichtung des Gleichspannungsschaltgeräts dazu eingerichtet sein, das Fortsetzen des Einschaltvorgangs des Gleichspannungsschaltgeräts zu veranlassen, wenn sie keinen Erdschluss des Plusleiters oder des Minusleiters erkennt, und zwar, indem sie das elektrische Abschalten der Vorladeschaltung, das Schließen des zweiten elektromechanischen Schalters, das erneute elektrische Zuschalten der Vorladeschaltung zum Aufladen von Kapazitäten auf der Ausgangsseite des Gleichspannungsschaltgeräts und zuletzt das Schließen des ersten Schaltelements veranlasst. Durch das Schließen des ersten Schaltelements wird der Einschaltvorgang beendet und die Gleichspannungslast eingeschaltet.

Gemäß einer weiteren Ausführungsform kann das erste Schaltelement beispielsweise zwei antiseriell geschaltete Halbleiterschalter umfassen. Ferner können alternativ oder ergänzend dazu der Plusleiter und der Minusleiter als Leiterbahnen auf einer Platine ausgeführt sein. Alternativ oder ergänzend dazu kann vorgesehen sein, dass der erste elektromechanische Schalter und der zweite elektromechanische Schalter als Relais bzw. Relaiskontakte ausgebildet sind.

Weiterhin umfasst die vorliegende Erfindung ein Schaltsystem, welches ein Gleichspannungsschaltgerät gemäß einer der zuvor beschriebenen Ausführungsformen, eine an die Ausgangsanschlüsse des Gleichspannungsschaltgeräts elektrisch angeschlossene Gleichspannungslast und eine an die Eingangsanschlüsse des Gleichspannungsschaltgeräts elektrisch angeschlossene Gleichspannungsquelle, welche insbesondere als Gleichspannungsbus ausgebildet ist, umfasst.

Zudem umfasst die vorliegende Erfindung ein Verfahren zum Betreiben eines Gleichspannungsschaltgeräts gemäß einer der zuvor beschriebenen Ausführungsformen. Zunächst befinden sich dabei das erste Schaltelement und der erste und zweite elektromechanische Schalter jeweils in einem geöffneten Zustand und die Vorladeschaltung ist elektrisch abgeschaltet. Das Verfahren umfasst die Schritte eines Anlegens einer externen Gleichspannung an die Eingangsanschlüsse des Gleichspannungsschaltgeräts und eines elektrischen Anschließens der Gleichspannungslast an die Ausgangsanschlüsse des Gleichspannungsschaltgeräts, eines Startens eines Einschaltvorgangs durch Schließen nur des ersten elektromechanischen Schalters des Gleichspannungsschaltgeräts, anschließendes elektrisches Zuschalten der Vorladeschaltung, Erfassen eines Stromflusses durch die Strommesseinrichtung in dem jeweiligen Plusleiter oder Minusleiter, in welchem die Strommesseinrichtung angeordnet ist, Auswerten des erfassten Stromflusses zum Erkennen eines Erdschlusses, und im Falle des Erkennens eines Erdschlusses des Plusleiters oder des Minusleiters eines Abbrechens des Einschaltvorgangs. Folglich umfasst das Verfahren zum Betreiben des Gleichspannungsschaltgeräts zumindest das Starten bzw. Beginnen eines Einschaltvorgangs zum Einschalten der zuvor anzuschließenden Gleichspannungslast. Der Einschaltvorgang umfasst zumindest ein Überprüfen dahingehend, ob ein Erdschluss auf der Ausgangsseite des Gleichspannungsschaltgeräts vorliegt. Wird ein solcher Erdschluss erkannt, so ist ein Abbrechen des Einschaltvorgangs vorgesehen, d.h. die Gleichspannungslast wird nicht eingeschaltet. Wird hingegen kein Erdschluss erkannt, kann insbesondere im Rahmen des Verfahrens vorgesehen sein, den Einschaltvorgang fortzusetzen und letztendlich mit dem Einschalten der Gleichspannungslast zu beenden.

Die der vorliegenden Erfindung zugrundeliegende Aufgabe kann ferner gelöst werden durch eine Schaltvorrichtung, zur Erdschlusserkennung während eines Einschaltvorgangs zum Einschalten einer angeschlossenen Gleichspannungslast, umfassend ein Gleichspannungsschaltgerät und ein parallel zu dem Gleichspannungsschaltgerät elektrisch zu- und abschaltbares Vorladegerät. Das Gleichspannungsschaltgerät und das Vorladegerät weisen jeweils einen ersten und einen zweiten Eingangsanschluss, die zum Anlegen einer gemeinsamen externen Gleichspannung ausgebildet sind, einen ersten und einen zweiten Ausgangsanschluss, die zum elektrischen Anschließen der Gleichspannungslast ausgebildet sind, einen Plusleiter, der zwischen dem ersten Eingangsanschluss und dem ersten Ausgangsanschluss verläuft, sowie einen Minusleiter, der zwischen dem zweiten Eingangsanschluss und dem zweiten Ausgangsanschluss verläuft, auf, wobei in dem Plusleiter und in dem Minusleiter des Gleichspannungsschaltgeräts jeweils ein elektromechanischer Schalter angeordnet ist und der Plusleiter des Vorladegeräts parallel zu dem Plusleiter des Gleichspannungsschaltgeräts und der Minusleiter des Vorladegeräts parallel zu dem Minusleiter des Gleichspannungsschaltgeräts jeweils unabhängig voneinander elektrisch zu- und abschaltbar sind. Das Vorladegerät weist ferner eine Strommesseinrichtung und eine Strombegrenzungseinrichtung auf, die beide in dem Plusleiter oder in dem Minusleiter des Vorladegeräts angeordnet sind. Die Strombegrenzungseinrichtung kann beispielsweise zumindest einen ohmschen Widerstand oder zumindest einen Tiefsetzsteller aufweisen. Die Schaltvorrichtung umfasst ferner eine Steuer- und Auswerteeinrichtung, welche dazu eingerichtet ist, zu Beginn eines Einschaltvorgangs der Schaltvorrichtung, zu dem eine gemeinsame externe Gleichspannung an die jeweiligen Eingangsanschlüsse angelegt ist, eine Gleichspannungslast an die jeweiligen Ausgangsanschlüsse elektrisch angeschlossen ist, sich die elektromechanischen Schalter des Gleichspannungsschaltgeräts jeweils im geöffneten Zustand befinden und das Vorladegerät elektrisch abgeschaltet ist, nur das elektrische Zuschalten des Plusleiters oder des Minusleiters des Vorladegeräts, in welchem die Strommesseinrichtung und die Strombegrenzungseinrichtung angeordnet sind, parallel zu dem entsprechenden Plusleiter oder Minusleiter des Gleichspannungsschaltgeräts zu veranlassen, einen von der Strommesseinrichtung in dem Plusleiter oder in dem Minusleiter des Vorladegeräts erfassten Stromfluss zum Erkennen eines Erdschlusses auszuwerten, und im Falle eines erkannten Erdschlusses des Plusleiters oder des Minusleiters des Gleichspannungsschaltgeräts das Abbrechen des Einschaltvorgangs der Schaltvorrichtung zu veranlassen.

Bei der zuvor beschriebenen Schaltvorrichtung ist im Gegensatz zu dem ebenfalls von der Erfindung umfassten, zuvor beschriebenen Gleichspannungsschaltgerät mit darin integrierter Vorladeschaltung vorgesehen, dass das Gleichspannungsschaltgerät der Schaltvorrichtung nicht notwendigerweise eine eigene Vorladeschaltung umfassen muss. Vielmehr ist vorgesehen, dass neben einer möglichen Vorladefunktion insbesondere das Erkennen eines Erdschlusses durch ein separates, parallel zu dem Gleichspannungsschaltgerät elektrisch zuschaltbares Vorladegerät erfolgt. Die Steuer-und Auswerteeinrichtung der Schaltvorrichtung, welche sowohl von dem separaten Vorladegerät als auch von dem Gleichspannungsschaltgerät umfasst sein kann oder aber als eigenes Bauteil vorliegen kann, ist dazu ausgebildet, im Wesentlichen die gleiche Abfolge von Schritten durchzuführen, wie dies bei der Steuer- und Auswerteeinrichtung des eingangs beschriebenen Gleichspannungsschaltgeräts der Fall ist, abgesehen von den baulichen Unterschieden der Anordnung der jeweiligen elektromechanischen Schalter, Strommesseinrichtung und Strombegrenzungseinrichtung. Die Steuer- und Auswerteeinrichtung des Gleichspannungsschaltgeräts und auch der Schaltvorrichtung können beispielsweise als FPGA oder Mikrocontroller ausgebildet sein.

Dementsprechend kann die Steuer- und Auswerteeinrichtung der erfindungsgemäßen Schaltvorrichtung dazu eingerichtet sein, einen Erdschluss des Plusleiters oder des Minusleiters durch ein Überschreiten eines von der Strommesseinrichtung erfassten Stromflusses von einen Referenzwert von im Wesentlichen null Ampere zu erkennen.

Ferner kann die Steuer- und Auswerteeinrichtung der erfindungsgemäßen Schaltvorrichtung dazu eingerichtet sein, das Abbrechen des Einschaltvorgangs der Schaltvorrichtung zu veranlassen, indem sie das elektrische Abschalten des zuvor zugeschalteten Plusleiters oder Minusleiters des Vorladegeräts, in welchem die Strommesseinrichtung und die Strombegrenzungseinrichtung angeordnet sind, veranlasst. Ergänzend oder alternativ dazu kann die Steuer- und Auswerteeinrichtung der erfindungsgemäßen Schaltvorrichtung dazu eingerichtet sein, das Fortsetzen des Einschaltvorgangs der Schaltvorrichtung zu veranlassen, wenn sie keinen Erdschluss des Plusleiters oder des Minusleiters erkennt, und zwar, indem sie zunächst das elektrische Zuschalten des noch abgeschalteten Plusleiters oder Minusleiters des Vorladegeräts parallel zu dem entsprechenden Plusleiter oder Minusleiter des Gleichspannungsschaltgeräts zum elektrischen Zuschalten des Vorladegeräts veranlasst, um Kapazitäten auf der Ausgangsseite der Schaltvorrichtung aufzuladen, und anschließend das Schließen der elektromechanischen Schalter des Gleichspannungsschaltgeräts veranlasst.

Zudem umfasst die Erfindung auch ein Verfahren zum Betreiben einer Schaltvorrichtung gemäß einer der zuvor beschriebenen Ausführungsformen, wobei sich zunächst der erste und zweite elektromechanische Schalter des Gleichspannungsschaltgeräts jeweils in einem geöffneten Zustand befinden und das Vorladegerät abgeschaltet ist. Das Verfahren umfasst die Schritte eines Anlegens einer gemeinsamen externen Gleichspannung an die jeweiligen Eingangsanschlüsse des Gleichspannungsschaltgeräts und des Vorladegeräts und eines elektrischen Anschließens der Gleichspannungslast an die jeweiligen Ausgangsanschlüsse des Gleichspannungsschaltgeräts und des Vorladegeräts, ferner eines Startens eines Einschaltvorgangs durch elektrisches Zuschalten nur des Plusleiters oder des Minusleiters des Vorladegeräts, in welchem die Strommesseinrichtung und die Strombegrenzungseinrichtung angeordnet sind, parallel zu dem entsprechenden Plusleiter oder Minusleiter des Gleichspannungsschaltgeräts, Erfassen eines Stromflusses durch die Strommesseinrichtung in dem jeweiligen Plusleiter oder Minusleiter des Vorladegeräts, in welchem die Strommesseinrichtung angeordnet ist, Auswerten des erfassten Stromflusses zum Erkennen eines Erdschlusses, und im Falle des Erkennens eines Erdschlusses des Plusleiters oder des Minusleiters des Gleichspannungsschaltgeräts eines Abbrechen des Einschaltvorgangs. Das Verfahren zum Betreiben des Gleichspannungsschaltgeräts umfasst somit zumindest das Starten bzw. Beginnen eines Einschaltvorgangs zum Einschalten der Gleichspannungslast, wobei der Einschaltvorgang zumindest ein Überprüfen dahingehend, ob ein Erdschluss auf der Ausgangsseite des Gleichspannungsschaltgeräts vorliegt, umfasst. Wird ein solcher Erdschluss erkannt, so ist ein Abbrechen des Einschaltvorgangs vorgesehen, d.h. die Gleichspannungslast wird nicht eingeschaltet.

Ferner kann in einer Weiterentwicklung des zuvor beschriebenen Verfahrens vorgesehen sein, dass der Einschaltvorgang durch elektrisches Abschalten des zuvor zugeschalteten Plusleiters oder Minusleiters des Vorladegeräts, in welchem die Strommesseinrichtung und die Strombegrenzungseinrichtung angeordnet sind, abgebrochen wird. Ergänzend oder alternativ dazu kann vorgesehen sein, dass der Einschaltvorgang für den Fall, dass kein Erdschluss des Plusleiters oder des Minusleiters erkannt wird, durch elektrisches Zuschalten des noch abgeschalteten Plusleiters oder Minusleiters des Vorladegeräts parallel zu dem entsprechenden Plusleiter oder Minusleiter des Gleichspannungsschaltgeräts zum elektrischen Zuschalten des Vorladegeräts und Aufladen von Kapazitäten auf der Ausgangsseite der Schaltvorrichtung, und anschließendes Schließen des ersten und zweiten elektromechanischen Schalters des Gleichspannungsschaltgeräts fortgesetzt wird.

Zudem kann im Rahmen des zuvor beschriebenen Verfahrens umfasst sein, dass bei dem Fortsetzen des Einschaltvorgangs ferner ein in dem Plusleiter oder in dem Minusleiter des Gleichspannungsschaltgeräts angeordnetes halbleiterbasiertes, ansteuerbares Schaltelement geschlossen wird. Das Fortsetzen des Einschaltvorgangs endet somit insbesondere mit dem Einschalten der Gleichspannungslast, womit der Einschaltvorgang beendet ist

Weitere Vorteile, Merkmale und Anwendungsmöglichkeiten der vorliegenden Erfindung werden anhand der folgenden Beschreibung von Ausführungsformen davon sowie der dazugehörigen Figuren deutlich. Es zeigen:
- Figur 1:: Blockschaltbild eines Gleichspannungsschaltgeräts gemäß einer ersten Ausführungsform der Erfindung,
- Figur 2:: Blockschaltbild eines Gleichspannungsschaltgeräts gemäß einer zweiten Ausführungsform der Erfindung,
- Figur 3:: Blockschaltbild eines Gleichspannungsschaltgeräts gemäß einer dritten Ausführungsform der Erfindung,
- Figur 4:: Blockschaltbild eines Schaltsystems umfassend das Gleichspannungsschaltgerät gemäß Figur 2 mit Erdschluss des Plusleiters,
- Figur 5:: Blockschaltbild eines Schaltsystems umfassend das Gleichspannungsschaltgerät gemäß Figur 2 mit Erdschluss des Minusleiters,
- Figur 6:: Flussdiagramm eines beispielhaften Verfahrensablaufs zum Betreiben eines Gleichspannungsschaltgeräts gemäß einer Ausführungsform der Erfindung,
- Figur 7:: Blockschaltbild einer Schaltvorrichtung gemäß einer Ausführungsform der Erfindung, und
- Figur 8:: Flussdiagramm eines beispielhaften Verfahrensablaufs zum Betreiben einer Schaltvorrichtung gemäß einer Ausführungsform der Erfindung.

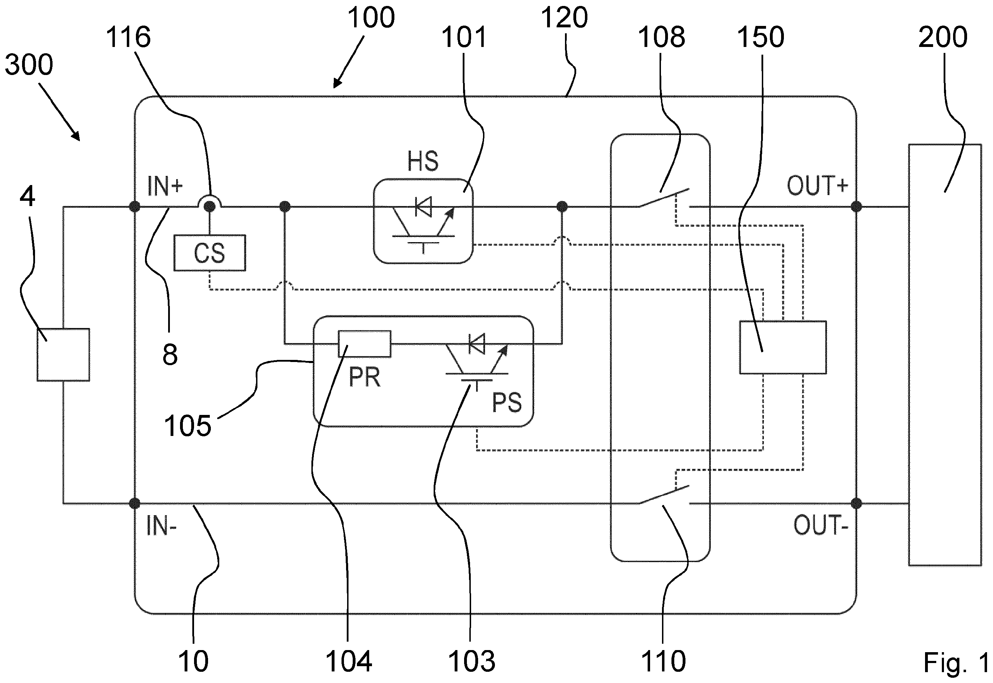

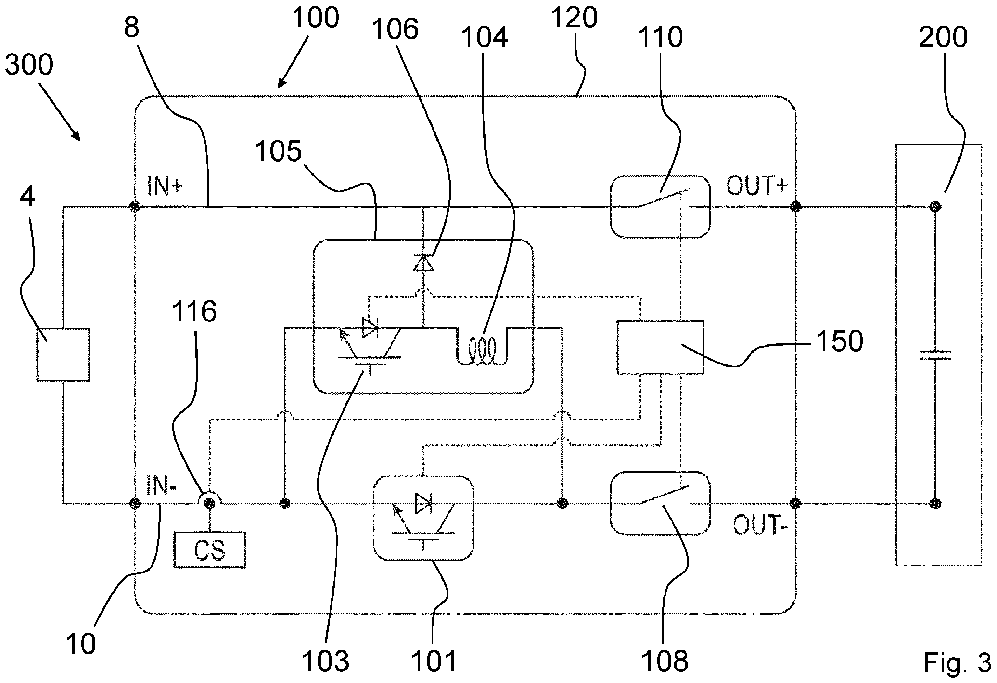

Figur 1 zeigt ein Blockschaltbild eines beispielhaften Gleichspannungsschaltgeräts 100, das insbesondere zum Erkennen eines Erdschlusses während eines Einschaltvorgangs zum Einschalten einer an das Gleichspannungsgeräts 100 angeschlossenen Gleichspannungslast 200 ausgebildet ist. Das dargestellte Gleichspannungsschaltgerät 100 ist beispielsweise in einem Gehäuse 120 untergebracht. Das Gleichspannungsschaltgerät 100 weist einen ersten und einen zweiten Eingangsanschluss IN+, IN-, die zum Anlegen einer externen Gleichspannung ausgebildet sind, sowie einen ersten und einen zweiten Ausgangsanschluss OUT+, OUT-, die zum elektrischen Anschließen der Gleichspannungslast 200 ausgebildet sind, auf. Weiterhin weist das Gleichspannungsschaltgerät 100 einen zwischen dem ersten Eingangsanschluss IN+ und dem ersten Ausgangsanschluss OUT+ verlaufenden Plusleiter 8 sowie einen zwischen dem zweiten Eingangsanschluss IN- und dem zweiten Ausgangsanschluss OUT- verlaufenden Minusleiter auf. Auch wenn in Figur 1 nicht dargestellt, so können der Plusleiter 8 und der Minusleiter 10 beispielsweise in einer nicht gezeigten Ausführungsform als Leiterbahnen auf einer Platine ausgeführt sein. Darüber hinaus umfasst das Gleichspannungsschaltgerät 100 gemäß Figur 1 ein erstes halbleiterbasiertes, ansteuerbares Schaltelement 101, eine Strommesseinrichtung 116, einen ersten elektromechanischen Schalter 108, einen zweiten elektromechanischen Schalter 110, wobei der erste und zweite elektromechanische Schalter 108, 110 beispielhaft jeweils als Relais ausgebildet ist, eine elektrisch zu- und abschaltbare Vorladeschaltung 105, welche eine Strombegrenzungseinrichtung 104 umfasst, und eine Steuer- und Auswerteeinrichtung 150, wobei die vorgenannten elektrischen Bauteile beispielhaft allesamt in dem Gehäuse 120 angeordnet sind. In Figur 1 umfasst die Strombegrenzungseinrichtung 104 der Vorladeschaltung 105 beispielhaft einen ohmschen Widerstand, wobei die Strombegrenzungseinrichtung 104 in weiteren Ausführungsformen auch auf andere Weise umgesetzt sein kann. So kann die Strombegrenzungseinrichtung 104 auch beispielsweise zumindest einen Tiefsetzsteller umfassen, wie in der in Figur 3 gezeigten Ausführungsform skizziert. Die Strommesseinrichtung 116, das erste Schaltelement 101 und der erste elektromechanische Schalter 108 sind im Beispiel der Figur 1 in dem Plusleiter 8 angeordnet, während der zweite elektromechanische Schalter 110 in dem jeweils anderen Leiter, und somit im Beispiel der Figur 1 in dem Minusleiter 110, angeordnet ist. Zu Beginn eines Einschaltvorgangs des Gleichspannungsschaltgeräts 100 befindet sich das Gleichspannungsschaltgerät 100 in einem Zustand, in welchem eine externe Gleichspannung an die Eingangsanschlüsse IN+, IN- angelegt ist, eine Gleichspannungslast 200 an die Ausgangsanschlüsse OUT+, OUT- elektrisch angeschlossen ist, sich das erste Schaltelement 101 und der erste und zweite elektromechanische Schalter 108, 110 jeweils in einem geöffneten Zustand befinden und die Vorladeschaltung 105 elektrisch abgeschaltet ist. Ausgehend von diesem Zustand ist die Steuer- und Auswerteeinrichtung 150 des Gleichspannungsschaltgeräts 100 dazu eingerichtet, nur bzw. zunächst nur das Schließen des ersten elektromechanischen Schalters 108 zu veranlassen und daran anschließend das elektrische Zuschalten der Vorladeschaltung 105 parallel zu dem ersten Schaltelement 101 zu veranlassen. In einer nicht gezeigten weiteren Ausführungsform könnte auch beispielsweise veranlasst werden, dass die Vorladeschaltung 105 parallel zu der Reihenschaltung des ersten Schaltelements 101 und dem ersten elektromechanischen Schalter 108 geschaltet wird. Die Strommesseinrichtung ist dazu ausgebildet, einen Stromfluss in dem jeweiligen Leiter, in welchem sie angeordnet ist, im Beispiel der Figur 1 in dem Plusleiter 8, zu erfassen bzw. zu messen. Ferner ist die Steuer- und Auswerteeinrichtung 150 dazu eingerichtet, den von der Strommesseinrichtung 116 im Plusleiter 8 erfassten Stromfluss zum Erkennen eines Erdschlusses auszuwerten, wobei sie im Falle eines erkannten Erdschlusses des Plusleiters 8 oder des Minusleiters 10 dazu eingerichtet ist, das Abbrechen des Einschaltvorgangs des Gleichspannungsschaltgeräts 100 zu veranlassen. Die Steuer- und Auswerteeinrichtung 150 ist in Figur 1 beispielhaft als Mikrocontroller ausgebildet, kann aber in einer weiteren Ausführungsform z.B. auch als FPGA ausgebildet sein.

Das Gleichspannungsschaltgerät 100 ermöglicht es insbesondere, während des Einschaltvorgangs und insbesondere vor Abschluss bzw. Beendigung des Einschaltvorgangs, d.h. bevor die Gleichspannungslast 200 eingeschaltet ist, einen potentiellen Erdschluss auf der Ausgangsseite des Gleichspannungsschaltgeräts 100 zu erkennen, indem die Steuer- und Auswerteeinrichtung 150 des Gleichspannungsschaltgeräts 100 dazu ausgebildet ist, eine festgelegte Einschaltsequenz, welche vorzugsweise in einer Speichereinrichtung der Steuer- und Auswerteeinrichtung 150 gespeichert ist, zu durchlaufen bzw. vorbestimmte Schritte in festgelegter Reihenfolge entsprechend der Einschaltsequenz im Rahmen des Einschaltvorgangs des Gleichspannungsschaltgeräts 100 durchzuführen. Diese Einschaltsequenz sieht vor, dass ausgehend von einem Zustand, bei welchem sich sämtliche Schalteinrichtungen des Gleichspannungsschaltgeräts 100 wie das erste Schaltelement 101, der erste und der zweite elektromechanische Schalter 108, 110 in einem geöffneten bzw. nicht elektrisch leitenden Zustand befinden, zunächst nur der erste 108 der beiden elektromechanischen Schalter 108, 110 zum Schließen veranlasst wird und anschließend die Vorladeschaltung 105 aktiviert wird, d.h. ein elektrisches Zuschalten der Vorladeschaltung 105 parallel zu zumindest dem ersten Schaltelement 101, und optional auch parallel zu weiteren elektrischen Bauteilen, veranlasst wird. Ein solches Zuschalten der Vorladeschaltung 105 kann beispielsweise durch eine von der Vorladeschaltung 105 umfasste Schalteinrichtung 103 erfolgen, die insbesondere von der Steuer- und Auswerteeinrichtung 150 zum Schließen und auch zum Öffnen veranlasst bzw. angesteuert werden kann. Eine entsprechende Schalteinrichtung 103 ist in Figur 1 beispielhaft gezeigt, wobei die Schalteinrichtung 103 gemäß Figur 1 beispielhaft als halbleiterbasiertes, ansteuerbares Schaltelement ausgebildet ist.

Nach erfolgtem Schließen von ausschließlich dem ersten elektromechanischen Schalter 108 und nach erfolgtem elektrischen Zuschalten der Vorladeschaltung 105 ist eine Strommessung durch die Strommesseinrichtung 116 und eine Auswertung des erfassten Stroms durch die Steuer- und Auswerteeinrichtung 150 vorgesehen. Wird anhand des ausgewerteten Stromflusses ein Erdschluss des Plusleiters 8 oder des Minusleiters 10 erkannt, so ist vorgesehen, dass die Steuer- und Auswerteeinrichtung 150 ein Abbrechen des Einschaltvorgangs des Gleichspannungsschaltgeräts 100 veranlasst, und zwar insbesondere unmittelbar nach dem Erkennen des Erdschlusses. Dadurch wird eine Belastung und insbesondere Beschädigung der elektrischen Bauteile des Gleichspannungsschaltgeräts 100 vermieden, zumindest aber deutlich verringert, sodass die betreffenden elektrischen Bauteile keinen bzw. nur einen äußerst geringfügigen Verschleiß erfahren. Das Abbrechen des Einschaltvorgangs infolge eines erkannten Erdschlusses führt somit stets dazu, dass der Einschaltvorgang nicht beendet und die Gleichspannungslast 200 somit nicht eingeschaltet wird. Ferner kann die Steuer- und Auswerteeinrichtung 150 optional auch dazu ausgebildet sein, den Erdschluss als vorliegenden Fehler anzuzeigen oder zu melden.

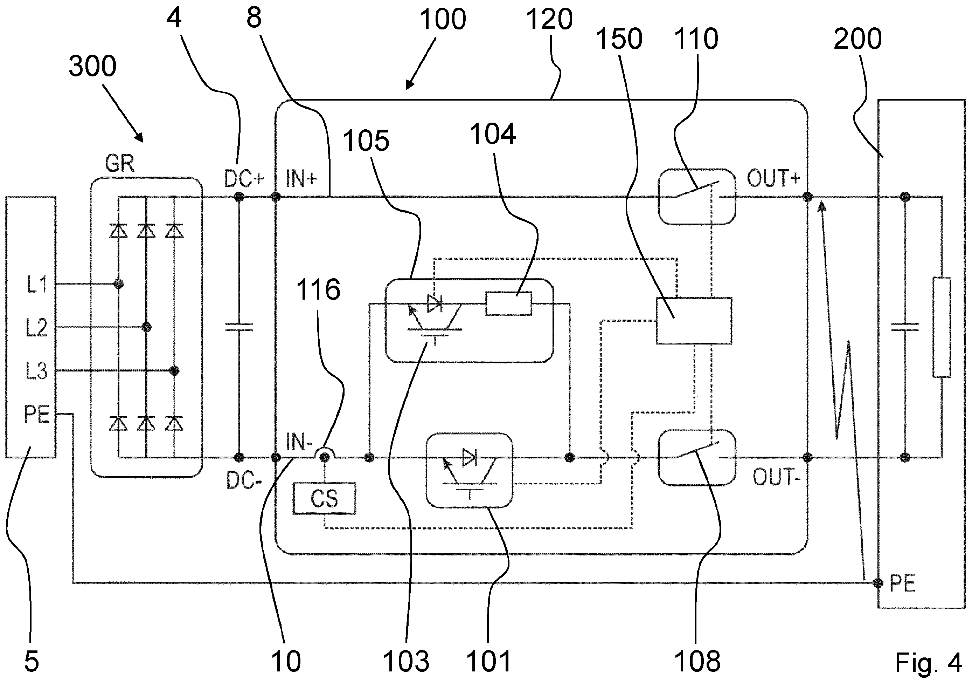

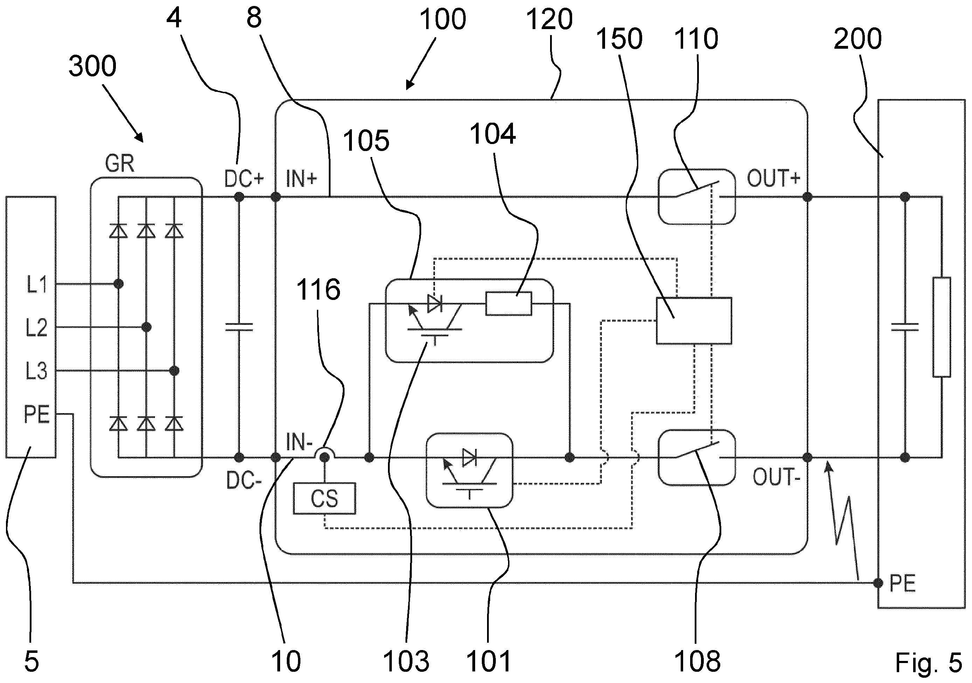

Das Erkennen eines Erdschlusses kann insbesondere dadurch erfolgen, dass die Steuer- und Auswerteeinrichtung 150 dazu eingerichtet ist, einen Erdschluss des Plusleiters 8 oder des Minusleiters 10 durch ein Überschreiten eines von der Strommesseinrichtung 116 erfassten Stromflusses von einen Referenzwert von im Wesentlichen null Ampere zu erkennen. Nachdem die Steuer- und Auswerteeinrichtung 150 ausgehend von dem zu Beginn des Einschaltvorgangs vorliegenden Zustand des Gleichspannungsschaltgeräts 100 nur den ersten elektromechanischen Schalter 108 zum Schließen veranlasst hat und anschließend ein Aktivieren der Vorladeschaltung 105 durch elektrisches Zuschalten der Vorladeschaltung 105 parallel zu dem ersten Schaltelement 101 veranlasst hat, liegt noch kein geschlossener Stromkreis aufgrund des sich noch im geöffneten bzw. nicht leitenden Zustand befindlichen zweiten elektromechanischen Schalters 110 vor, sofern es keinen Erdschluss auf der Ausgangsseite des Gleichspannungsschaltgeräts gibt. Demzufolge sollte die Strommesseinrichtung 116 keinen Stromfluss bzw. einen Stromfluss von im Wesentlichen null Ampere messen. Liegt jedoch ein Erdschluss des Plusleiters 8 oder des Minusleiters 10 vor, so wird der Stromkreis dadurch bedingt geschlossen. Dank der Strombegrenzungseinrichtung 104 der Vorladeschaltung 105 wird der Stromfluss begrenzt, sodass zumindest der elektromechanische Schalter 108, und bei einem Erdschluss des Minusleiters 110 auch die in diesem Fall elektrisch angeschlossene Gleichspannungslast 200, vor hohen Stromspitzen geschützt werden. Der im Falle eines Erdschlusses erfolgende Stromfluss wird von der Strommesseinrichtung 116 erfasst, wobei der erfasste Stromfluss von der Steuer- und Auswerteeinrichtung 150 beispielsweise durch einen Vergleich mit dem Referenzwert von im Wesentlichen null Ampere ausgewertet wird. Da der erfasste Stromfluss im Fall des Vorliegens eines Erdschlusses den Referenzwert von im Wesentlichen null Ampere klar überschreitet, stellt die Steuer-und Auswerteeinrichtung 150 in diesem Fall einen Erdschluss fest. Ob ein Erdschluss des Plusleiters 8 oder des Minusleiters vorliegt, kann insbesondere dadurch festgestellt werden, ob ein Strom durch die Gleichspannungslast 200 fließt oder nicht, wie hinsichtlich der Figuren 4 und 5 erläutert.

Zweckmäßigerweise steht die Steuer-und Auswerteeinrichtung 150 zumindest mit dem ersten und zweiten elektromechanischen Schalter 108, 110, dem ersten Schaltelement 101, einer Schalteinrichtung der Vorladeschaltung 105 zum elektrischen Zu- und Abschalten der Vorladeschaltung 105, wie beispielsweise der in Figur 1 gezeigten Schalteinrichtung 103, und der Strommesseinrichtung 116 in Kommunikationsverbindung. Dies ist in Figur 1 anhand der gestrichelten Verbindungslinien dargestellt.

Die Steuer-und Auswerteeinrichtung 150 des in Figur 1 gezeigten Gleichspannungsschaltgeräts 100 ist ferner insbesondere dazu eingerichtet, das Abbrechen des Einschaltvorgangs zu veranlassen, indem sie das elektrische Abschalten der Vorladeschaltung 105 und dann das Öffnen des ersten elektromechanischen Schalters 108 veranlasst. Wie in Figur 1 skizziert, kann das elektrische Abschalten der Vorladeschaltung 105 beispielsweise durch ein Öffnen der Schalteinrichtung 103 der Vorladeschaltung 105 erfolgen. Somit wird das Gleichspannungsschaltgerät 100 wieder in den Zustand versetzt, den es zu Beginn des Einschaltvorgags eingenommen hatte.

Zudem ist die Steuer-und Auswerteeinrichtung 150 des in Figur 1 gezeigten Gleichspannungsschaltgeräts 100 ferner insbesondere dazu eingerichtet, das Fortsetzen des Einschaltvorgangs des Gleichspannungsschaltgeräts 100 zu veranlassen, wenn sie keinen Erdschluss des Plusleiters 8 oder des Minusleiters 10 erkennt, indem sie das elektrische Abschalten der Vorladeschaltung 105, das Schließen des zweiten elektromechanischen Schalters 110, das erneute elektrische Zuschalten der Vorladeschaltung 105 zum Aufladen von Kapazitäten auf der Ausgangsseite des Gleichspannungsschaltgeräts 100, und zuletzt das Schließen des ersten Schaltelements 101 veranlasst. Wie zuvor erwähnt, kann dabei das elektrische Abschalten und Zuschalten der Vorladeschaltung 105 beispielsweise mittels einer Ansteuerung der Schalteinrichtung 103 der Vorladeschaltung 105 zum Öffnen bzw. Schließen durch die Steuer- und Auswerteeinrichtung 150 erfolgen. Demnach ist die Vorladeschaltung 105 des Gleichspannungsschaltgeräts 100 insbesondere zum Aufladen von Kapazitäten auf der Ausgangsseite des Gleichspannungsschaltgeräts 100 eingerichtet, wenn sich das Gleichspannungsschaltgerät 100 in einem Zustand befindet, in welchem die Vorladeschaltung 105 elektrisch zugeschaltet ist und der erste und zweite elektromechanische Schalter 108, 110 geschlossen sind. Ein Aufladen von Kapazitäten auf der Ausgangsseite des Gleichspannungsschaltgeräts 100 durch die Vorladeschaltung 105 wird folglich bei dem erfindungsgemäßen Gleichspannungsschaltgeräts 100 nur dann ermöglicht, wenn zuvor kein Erdschluss festgestellt worden ist und infolgedessen ein Fortsetzen des Einschaltvorgangs des Gleichspannungsschaltgeräts 100 erfolgt ist.

Auch ein Schließen des ersten Schaltelements 101, und somit ein Einschalten der Gleichspannungslast 200 mittels des Gleichspannungsschaltgeräts 100, kommt erst zustande, wenn zuvor kein Erdschluss festgestellt worden ist und zudem die ausgangsseitigen Kapazitäten durch die Vorladeschaltung 105 aufgeladen worden sind. Das erste Schaltelement 101 kann, wie in Figur 1 dargestellt, ein einziges Halbleiterschaltelement umfassen, kann aber in einer weiteren Ausführungsform beispielsweise auch zwei antiseriell geschaltete Halbleiterschalter umfassen.

Zudem zeigt Figur 1 auch ein Schaltsystem 300, welches das zuvor beschriebene Gleichspannungsschaltgerät 100, die an die Ausgangsanschlüsse OUT+, OUT- des Gleichspannungsschaltgeräts 100 elektrisch angeschlossene Gleichspannungslast 200 und eine an die Eingangsanschlüsse IN+, IN- des Gleichspannungsschaltgeräts 100 elektrisch angeschlossene Gleichspannungsquelle 4 umfasst.

Die Gleichspannungsquelle 4 ist in allen Ausführungsbeispielen der Figuren 1-8 insbesondere dazu vorgesehen, eine Gleichspannung von bis zu 1500 V bereitzustellen. Gleichspannungen in diesem Bereich werden auch als Niederspannung bezeichnet. Als Gleichspannung kann insbesondere eine Spannung vorgesehen sein, die größer als eine Gleichspannung in der Höhe von 120 V, d.h. größer als die sog. Kleinspannung, ist. Insbesondere kann eine Gleichspannung zwischen 400 V und 800V von der gleichspannungsquelle bereitgestellt werden.

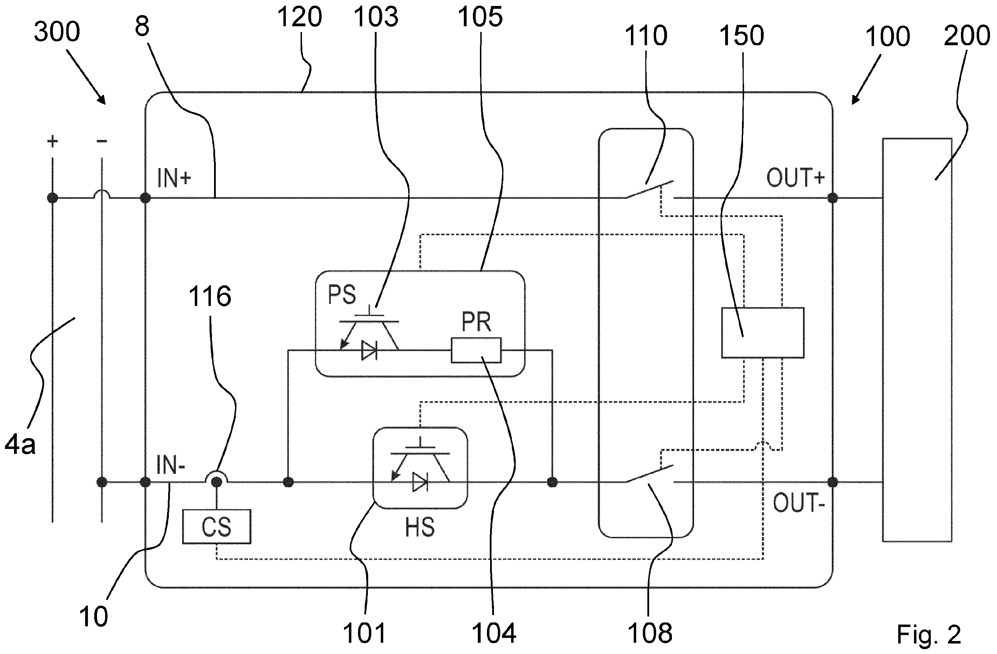

Figur 2 stellt ein Blockschaltbild eines weiteren beispielhaften Gleichspannungsschaltgeräts 100 dar, das insbesondere zum Erkennen eines Erdschlusses während eines Einschaltvorgangs zum Einschalten einer angeschlossenen Gleichspannungslast 200 ausgebildet ist. Für das in Figur 2 gezeigte Gleichspannungsschaltgerät wurden die gleichen Bezugszeichen wie für das in Figur 1 gezeigte Gleichspannungsschaltgerät verwendet. Denn das in Figur 2 dargestellte Gleichspannungsschaltgerät 100 unterscheidet sich von dem in Figur 1 dargestellten Gleichspannungsschaltgerät 100 jedoch lediglich darin, dass die Strommesseinrichtung 116, das erste Schaltelement 101 und der erste elektromechanische Schalter 108 nicht in dem Plusleiter 8, sondern in dem Minusleiter 10 angeordnet sind. Folglich ist der zweite elektromechanische Schalter 110 im Gegensatz zu Figur 1 nun in dem Plusleiter 8, und nicht in dem Minusleiter 10, angeordnet. Die Strommesseinrichtung 116 gemäß Figur 2 ist somit dazu eingerichtet, einen durch den Minusleiter 10 fließenden Stromfluss zu erfassen, nachdem die Steuer- und Auswerteeinrichtung 150 nur den ersten, im Minusleiter 10 angeordneten elektromechanischen Schalter 108 zum Schließen und die Vorladeschaltung 105 zum elektrischen Zuschalten parallel zu dem ersten Schaltelement 101, welches ebenfalls in dem Minusleiter 10 angeordnet ist, veranlasst hat.

Ferner zeigt auch Figur 2 ein Schaltsystem 300, welches das zuvor beschriebene Gleichspannungsschaltgerät 100, die an die Ausgangsanschlüsse OUT+, OUT- des Gleichspannungsschaltgeräts 100 elektrisch angeschlossene Gleichspannungslast 200 und eine an die Eingangsanschlüsse IN+, IN- des Gleichspannungsschaltgeräts 100 elektrisch angeschlossene Gleichspannungsquelle 4 umfasst, wobei die Gleichspannungsquelle 4 in der in Figur 2 gezeigten beispielhaften Ausführungsform ein Gleichspannungsbus 4a ist.

Figur 3 zeigt ein Blockschaltbild eines weiteren beispielhaften Gleichspannungsschaltgeräts 100, das insbesondere zum Erkennen eines Erdschlusses während eines Einschaltschaltvorgangs zum Einschalten einer angeschlossenen Gleichspannungslast 200 ausgebildet ist. Für das in Figur 3 gezeigte Gleichspannungsschaltgerät wurden die gleichen Bezugszeichen wie für das in Figur 1 gezeigte Gleichspannungsschaltgerät verwendet. Denn das in Figur 3 skizzierte Gleichspannungsschaltgerät 100 unterscheidet sich von dem in Figur 2 dargestellten Gleichspannungsschaltgerät lediglich dadurch, dass die Strombegrenzungseinrichtung 104 der Vorladeschaltung 105 statt einen ohmschen Widerstand, wie in Figur 2 dargestellt, einen Tiefsetzsteller umfasst, welcher eine Induktivität und eine Diode 106 aufweisen kann. Zudem weist das in Figur 3 gezeigte Schaltsystem 300 neben dem Gleichspannungsschaltgerät 100 die an die Ausgangsanschlüsse OUT+, OUT- des Gleichspannungsschaltgeräts 100 elektrisch angeschlossene Gleichspannungslast 200 und eine an die Eingangsanschlüsse IN+, IN- des Gleichspannungsschaltgeräts 100 elektrisch angeschlossene Gleichspannungsquelle 4 auf.

Figur 4 zeigt ein Blockschaltbild eines Schaltsystems 300, welches das Gleichspannungsschaltgerät 100 gemäß Figur 2, eine an die Ausgangsanschlüsse OUT+, OUT- des Gleichspannungsschaltgeräts 100 elektrisch angeschlossene Gleichspannungslast 200 und eine an die Eingangsanschlüsse IN+, IN- des Gleichspannungsschaltgeräts 100 elektrisch angeschlossene Gleichspannungsquelle 4 umfasst. Die Gleichspannungsquelle 4 kann zum Beispiel ein dreiphasiges Wechselspannungsnetz 5, eine daran angeschlossene Gleichrichterschaltung GR und gegebenenfalls einen am Ausgang der Gleichrichterschaltung GR angeschlossenen Glättungskondensator aufweisen. Im Ausführungsbeispiel der Figur 4 ist ferner mittels eines skizzierten Blitzes mit Pfeilspitze zum Plusleiter 8 hin dargestellt, dass ein Erdschluss von dem zwischen dem Wechselspannungsnetz 5 und der elektrisch angeschlossenen Gleichspannungslast 200 geführten Schutzleiter PE zu dem Plusleiter 8 des Gleichspannungsschaltgeräts 100 an dessen Ausgang vorliegt.

Wie in Figur 4 dargestellt, befindet sich das Gleichspannungsschaltgerät 100 zu Beginn des Einschaltvorgangs in einem Zustand, in welchem eine externe Gleichspannung, die von dem gleichgerichteten dreiphasigen Wechselstromnetz 5 bereitgestellt wird, an die Eingangsanschlüsse IN+, IN- angelegt ist, die Gleichspannungslast 200 an die Ausgangsanschlüsse OUT+, OUT- elektrisch angeschlossen ist, sich das erste Schaltelement 101, der erste und der zweite elektromechanische Schalter 108, 110 jeweils in einem geöffneten Zustand befinden und die Vorladeschaltung 105 elektrisch abgeschaltet ist. Ausgehend von diesem Zustand ist die Steuer- und Auswerteeinrichtung 150 des Gleichspannungsschaltgeräts 100 dazu eingerichtet, den Einschaltvorgang zu starten, indem sie zunächst das Schließen des ersten elektromechanischen Schalters 108, der in Reihe zu der Strommesseinrichtung 116 und dem ersten Schaltelement 101 geschaltet ist, veranlasst. Daran anschließend veranlasst die Steuer- und Auswerteeinrichtung 150 ein Aktivieren der Vorladeschaltung 105, indem diese parallel zu zumindest dem ersten Schaltelement 101 elektrisch zugeschaltet wird. Da der im Plusleiter 8 angeordnete zweite elektromechanische Schalter 110 noch geöffnet und somit nicht elektrisch leitend geschaltet ist, ist die Gleichspannungslast 200 noch nicht an die Gleichspannung elektrisch angeschlossen, sodass es aufgrund eines nicht geschlossenen Stromkreises zu keinem Stromfluss innerhalb des Gleichspannungsschaltgeräts 100 kommen sollte. Jedoch sorgt der in Figur 4 durch einen Blitz symbolisch dargestellte Erdschluss von dem Schutzleiter PE zu dem Plusleiter 8 am Ausgang des Gleichspannungsschaltgeräts 100 dafür, dass ein geschlossener Stromkreis vorliegt. Folglich wird die in dem Minusleiter 10 angeordnete Strommesseinrichtung 116 einen Stromfluss erfassen, der einen Wert von null Ampere überschreitet. Die Steuer- und Auswerteeinrichtung 150 ist nun dazu eingerichtet, den von der Strommesseinrichtung 116 im Minusleiter 10 erfassten Stromfluss zum Erkennen eines Erdschlusses auszuwerten. Dies kann sie auf einfache Weise tun, indem sie beispielsweise ein Überschreiten des erfassten Stromflusses von einem Referenzwert von im Wesentlichen null Ampere feststellt. Ferner kann die Steuer- und Auswerteeinrichtung 150 dazu eingerichtet sein, einen Erdschluss als Fehlermeldung auszugeben bzw. anzuzeigen, beispielsweise mittels eines optischen Signals oder eines akustischen Signals.

Zudem kann auf einfache Weise festgestellt werden, welcher Leiter des Gleichspannungsschaltgeräts 100 von einem Erdschluss betroffen ist. Liegt ein Erdschluss eines Leiters vor und es ist ein Stromfluss durch die Gleichspannungslast 200 feststellbar, so muss ein Erdschluss des Leiters vorliegen, in welchem der noch geöffnete zweite elektromechanische Schalter 110 angeordnet ist bzw. in welchem der geschlossene erste elektromechanische Schalter 108 nicht angeordnet ist, wie dies im Beispiel der Figur 4 zu sehen ist. Liegt hingegen ein Erdschluss eines Leiters vor und es ist kein Stromfluss durch die Gleichspannungslast 200 feststellbar, so muss ein Erdschluss des Leiters vorliegen, in welchem der geschlossene bzw. elektrisch leitende erste elektromechanische Schalter 108 angeordnet ist, wie dies im Beispiel der Figur 5 zu sehen ist.

Figur 5 unterscheidet sich von der in Figur 4 dargestellten Ausführungsform eines Schaltsystems 300 lediglich dadurch, dass ein Erdschluss des Minusleiters 10 und nicht des Plusleiters 8 des Gleichspannungsschaltgeräts 100 vorliegt, und zwar ein Erdschluss von dem zwischen dem Wechselspannungsnetz 5 und der elektrisch angeschlossenen Gleichspannungslast 200 geführten Schutzleiter PE zu dem Minusleiter 10 des Gleichspannungsschaltgeräts 100 an dessen Ausgang.

Unabhängig davon, ob ein Erdschluss des Plusleiters 8 mit stromdurchflossener Gleichspannungslast 200, wie in Figur 4, oder ein Erdschluss des Minusleiters 10 mit nicht stromdurchflossener Gleichspannungslast 200 erkannt wird, ist die Steuer- und Auswerteeinrichtung 150 dazu eingerichtet, im Falle des Erkennens eines Erdschlusses ein Abbrechen des Einschaltvorgangs des Gleichspannungsschaltgeräts 100, und somit ein Verhindern des elektrischen Anschließen der Gleichspannungslast 200 an die externe Gleichspannung, zu veranlassen. Dies erfolgt insbesondere durch das elektrische Abschalten der Vorladeschaltung 105, gemäß Figuren 4 und 5 beispielsweise durch ein Öffnen der Schalteinrichtung 103 der Vorladeschaltung 105, und dann durch das Öffnen des ersten elektromechanischen Schalters 108. Durch das Abbrechen des Einschaltvorgangs wird somit verhindert, dass ein Einschalten der angeschlossenen Gleichspannungslast 200 erfolgt.

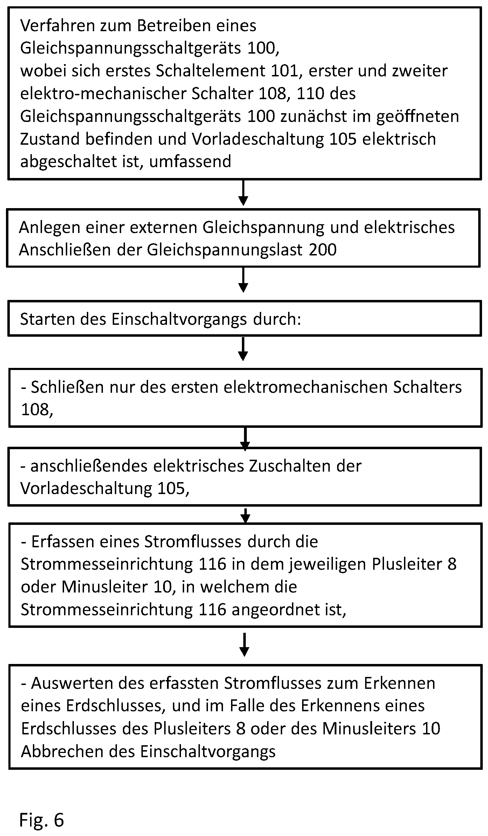

Figur 6 zeigt in schematischer Weise ein Flussdiagramm eines beispielhaften Verfahrensablaufs zum Betreiben eines Gleichspannungsschaltgeräts 100, wie beispielsweise in Figuren 1-5 dargestellt, und insbesondere zum Erkennen eines Erdschlusses während eines Einschaltvorgangs zum Einschalten einer zuvor anzuschließenden bzw. angeschlossenen Gleichspannungslast 200 mittels des Gleichspannungsschaltgeräts 100. Ausgehend von einem Zustand des Gleichspannungsschaltgeräts 100, in welchem sich das erste Schaltelement 101, der erste und der zweite elektromechanischer Schalter 108, 110 zunächst im geöffneten Zustand befinden und die Vorladeschaltung 105 elektrisch abgeschaltet ist, umfasst das Verfahren das Anlegen einer externen Gleichspannung an die Eingangsanschlüsse IN+, IN- des Gleichspannungsschaltgeräts 100 und das elektrische Anschließen der Gleichspannungslast 200 an die Ausgangsanschlüsse OUT+, OUT- des Gleichspannungsschaltgeräts 100 sowie das Starten eines Einschaltvorgangs. Der Einschaltvorgang wird im Rahmen des erfindungsgemäßen Verfahrens gestartet durch ein Schließen nur des ersten elektromechanischen Schalters 108 des Gleichspannungsschaltgeräts 100, d.h. desjenigen elektromechanischen Schalters, der in dem gleichen Leiter wie die Strommesseinrichtung 116 und die Vorladeschaltung 105 angeordnet ist, und anschließendes elektrisches Zuschalten der Vorladeschaltung 105. Daraufhin sieht das Verfahren ein Erfassen eines Stromflusses durch die Strommesseinrichtung 116 in dem jeweiligen Plusleiter 8 oder Minusleiter 10 vor, in welchem die Strommesseinrichtung 116 angeordnet ist, gefolgt von einem Auswerten des erfassten Stromflusses zum Erkennen eines Erdschlusses, wobei im Falle des Erkennens eines Erdschlusses des Plusleiters 8 oder des Minusleiters 10 ein Abbrechen des Einschaltvorgangs vorgesehen ist. Das Verfahren zum Betreiben des Gleichspannungsschaltgeräts 100 umfasst folglich zumindest ein Starten des Einschaltvorgangs zum Einschalten einer zuvor anzuschließenden bzw. angeschlossenen Gleichspannungslast 200, wobei zu Beginn des Einschaltvorgangs eine Überprüfung hinsichtlich eines potentiellen Erdschlusses auf der Ausgangsseite des Gleichspannungsschaltgeräts 100 erfolgt. Durch das Abbrechen des Einschaltvorgangs infolge eines erkannten Erdschlusses wird ein Einschalten der zuvor angeschlossenen Gleichspannungslast 200 verhindert.

Das Abbrechen des Einschaltvorgangs kann insbesondere durch elektrisches Abschalten der Vorladeschaltung 105 und Öffnen des ersten elektromechanischen Schalters 108 des Gleichspannungsschaltgeräts 100 erfolgen. Ergänzend oder alternativ dazu kann der Einschaltvorgang für den Fall, dass kein Erdschluss des Plusleiters 8 oder des Minusleiters 10 erkannt wird, durch ein elektrisches Abschalten der Vorladeschaltung 105, ein Schließen des zweiten elektromechanischen Schalters 110, ein erneutes elektrisches Zuschalten der Vorladeschaltung 105 zum Aufladen von Kapazitäten auf der Ausgangsseite des Gleichspannungsschaltgeräts 100 und zuletzt ein Schließen des ersten Schaltelements 101 fortgesetzt werden, wie hinsichtlich der Figuren 1-5 bereits beschrieben, sodass die Gleichspannungslast 200 eingeschaltet bzw. an die externe Gleichspannung angeschlossen wird. Somit kann im Rahmen des Verfahrens zum Betreiben des Gleichspannungsschaltgeräts 100 für den Fall, dass kein Erdschluss erkannt wird, ferner vorgesehen sein, den Einschaltvorgang fortzusetzen und diesen mit dem Einschalten der Gleichspannungslast zu beenden.

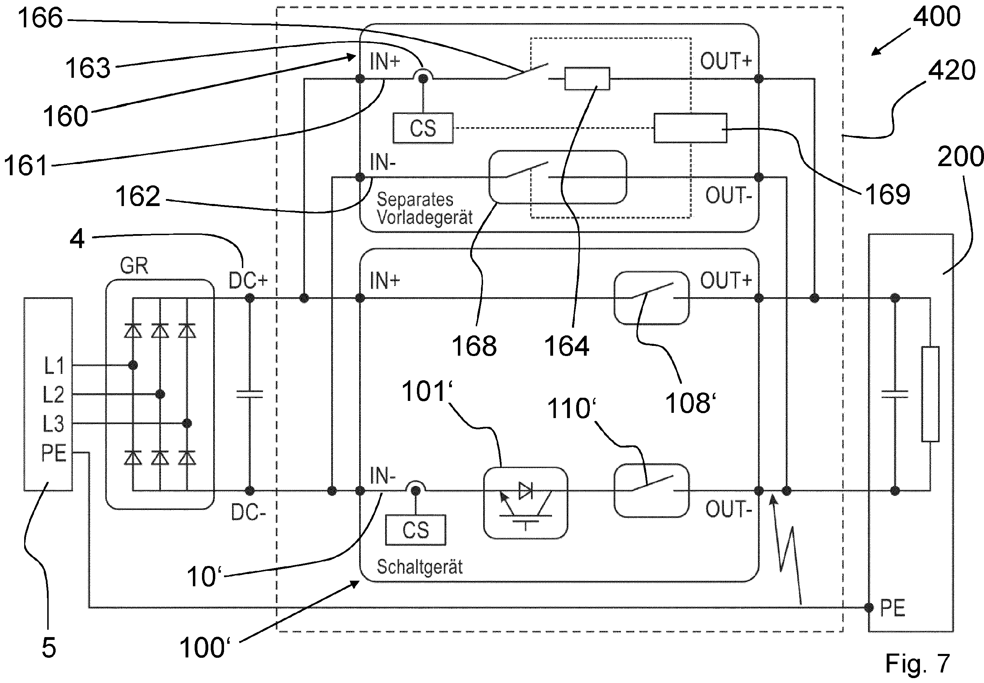

Alternativ zu den in den Figuren 1-3 dargestellten Gleichspannungsschaltgeräten 100, die jeweils eine integrierte, elektrisch zuschaltbare Vorladeschaltung 105 aufweisen, ist in Figur 7 ein Blockschaltbild einer beispielhaften Schaltvorrichtung 400 dargestellt, die insbesondere zum Erkennen eines Erdschlusses während eines Einschaltvorgangs zum Einschalten einer an die Schaltvorrichtung 400 angeschlossenen Gleichspannungslast 200 ausgebildet ist. Die Schaltvorrichtung 400 weist ein Gleichspannungsschaltgerät 100' und ein zu diesem parallel elektrisch zu- sowie abschaltbares separates Vorladegerät 160 auf, was in Figur 7 durch eine gestrichelte Umrandung des Gleichspannungsschaltgeräts 100' und des Vorladegeräts 160 symbolisch dargestellt ist. Wie in Figur 7 dargestellt, umfasst die Schaltvorrichtung beispielhaft ein Gehäuse 420, in welchem das Gleichspannungsschaltgerät 100' und das Vorladegerät 160 angeordnet sind. Das Gleichspannungsschaltgerät 100' und das Vorladegerät 160 können in einer weiteren Ausführungsform beispielsweise auch jeweils in einem separaten Gehäuse angeordnet sein.

Das Gleichspannungsschaltgerät 100' der Schaltvorrichtung 400 unterscheidet sich von dem Gleichspannungsschaltgerät 100 gemäß der Figuren 1-5 insbesondere dadurch, dass es keine eigene Vorladeschaltung umfasst. Neben einem Aufladen von Kapazitäten auf der Ausgangsseite des Gleichspannungsschaltgeräts 100' wird die Aufgabe des Erkennens eines Erdschlusses bei der Schaltvorrichtung 400 somit mit Hilfe des separaten Vorladegeräts 160 durchgeführt und folglich zumindest teilweise von dem Gleichspannungsschaltgerät 100 mit integrierter Vorladeschaltung 105 auf das separate Vorladegerät 160 verlagert. Sowohl die integrierte Vorladeschaltung 105 wie auch das separate Vorladegerät 160 sind jedoch stets elektrisch zu- und abschaltbar ausgebildet.

Gemäß der in Figur 7 gezeigten Schaltvorrichtung 400 umfassen sowohl das Gleichspannungsschaltgerät 100' als auch das Vorladegerät 160 jeweils einen ersten und einen zweiten Eingangsanschluss IN+, IN-, die zum Anlegen einer gemeinsamen externen Gleichspannung ausgebildet sind, einen ersten und einen zweiten Ausgangsanschluss OUT+, OUT-, die zum elektrischen Anschließen der Gleichspannungslast 200 ausgebildet sind, einen Plusleiter 8', 161, der zwischen dem jeweiligen ersten Eingangsanschluss IN+ und dem jeweiligen ersten Ausgangsanschluss OUT+ verläuft, sowie einen Minusleiter 10', 162, der zwischen dem jeweiligen zweiten Eingangsanschluss IN- und dem zweiten Ausgangsanschluss OUT- verläuft. In dem Plusleiter 8' und in dem Minusleiter 10' des Gleichspannungsschaltgeräts 100' ist jeweils ein elektromechanischer Schalter 108', 110' angeordnet, welche beispielsweise als Relais bzw. Relaiskontakte ausgebildet sein können. Der Plusleiter 161 des Vorladegeräts 160 ist parallel zu dem Plusleiter 8' des Gleichspannungsschaltgeräts 100' elektrisch zu- und abschaltbar. Dafür ist in der in Figur 7 gezeigten Ausführungsform beispielhaft ein elektromechanischer Schalter 166 vorgesehen, der z.B. als Relais ausgebildet sein kann und in dem Plusleiter 161 des Vorladegeräts 160 angeordnet ist. Der Minusleiter 162 des Vorladegeräts 160 ist parallel zu dem Minusleiter 10' des Gleichspannungsschaltgeräts 100' elektrisch zu- und abschaltbar, wobei ein elektrisches Zu- und Abschalten gemäß Figur 7 ebenfalls beispielhaft mit Hilfe eines als Relais ausgebildeten elektromechanischen Schalters 168 erfolgt, der in dem Minusleiter 162 des Vorladegeräts 160 angeordnet ist. Es können aber auch alternative Schaltelemente zum Zu- und Abschalten des Plusleiters 161 und/oder des Minusleiters 162 des Vorladegeräts 160 zu bzw. von dem jeweiligen Plus- und/oder Minusleiter 8', 10' des Gleichspannungsschaltgeräts 100' vorgesehen sein. Dabei muss jedoch stets gewährleistet sein, dass der Plusleiter 161 und der Minusleiter 162 des Vorladegeräts 160 jeweils unabhängig voneinander zu den entsprechenden Leitern 8', 10' des Gleichspannungsschaltgeräts 100' elektrisch zu- und abschaltbar sind.

Wie in Figur 7 zu sehen, umfasst das Vorladegerät 160 ferner eine Strommesseinrichtung 163 und eine Strombegrenzungseinrichtung 164, die beide in Figur 7 beispielhaft in dem Plusleiter 161 angeordnet sind, jedoch in einer weiteren Ausführungsform auch in dem Minusleiter 162 des Vorladegeräts 160 angeordnet sein könnten. Die Strombegrenzungseinrichtung 164 umfasst in Figur 7 beispielhaft einen ohmschen Widerstand, kann in einer weiteren Ausführungsform aber auch eine andere Einrichtung zur Strombegrenzung, z.B. zumindest einen Tiefsetzsteller, umfassen. Die Schaltvorrichtung 400 weist ferner eine Steuer- und Auswerteeinrichtung 169 auf, die in Figur 7 beispielhaft in dem Vorladegerät 160 angeordnet ist. In weiteren Ausführungsformen kann die Steuer- und Auswerteeinrichtung 169 in dem Gleichspannungsschaltgerät 100' angeordnet und von diesem umfasst sein oder auch als von dem Vorladegerät 160 und dem Gleichspannungsschaltgerät 100' baulich getrennte Einrichtung der Schaltvorrichtung 400 ausgebildet sein. Entsprechend der Steuer- und Auswerteeinrichtung 150 des Gleichspannungsschaltgeräts 100 der Figuren 1-3 hat auch die Steuer- und Auswerteeinrichtung 169 des Vorladegeräts 160 die Funktion, eine Einschaltsequenz zum Erkennen eines Erdschlusses durchzuführen. Folglich ist die Steuer- und Auswerteeinrichtung 169 des Vorladegeräts 160 dazu eingerichtet, zu Beginn eines Einschaltvorgangs der Schaltvorrichtung 400, zu dem eine gemeinsame externe Gleichspannung an die jeweiligen Eingangsanschlüsse IN+, IN- angelegt ist, eine Gleichspannungslast 200 an die jeweiligen Ausgangsanschlüsse OUT+, OUT- elektrisch angeschlossen ist, sich die elektromechanischen Schalter 108', 110' des Gleichspannungsschaltgeräts 100' jeweils im geöffneten Zustand befinden und das Vorladegerät 160 elektrisch abgeschaltet ist, nur das elektrische Zuschalten des Plusleiters 161 oder des Minusleiters 162 des Vorladegeräts 160, in welchem die Strommesseinrichtung 163 und die Strombegrenzungseinrichtung 164 angeordnet sind, parallel zu dem entsprechenden Plusleiter 8' oder Minusleiter 10' des Gleichspannungsschaltgeräts 100' zu veranlassen, daraufhin einen von der Strommesseinrichtung 163 in dem Plusleiter 161 oder in dem Minusleiter 162 des Vorladegeräts 160 erfassten Stromfluss zum Erkennen eines Erdschlusses auszuwerten und im Falle eines erkannten Erdschlusses des Plusleiters 8' oder des Minusleiters 10' des Gleichspannungsschaltgeräts 100' das Abbrechen des Einschaltvorgangs der Schaltvorrichtung 400 zu veranlassen. Durch das Abbrechen des Einschaltvorgangs wird folglich ein Einschalten der angeschlossenen Gleichspannungslast 200 verhindert.

Die in Figur 7 gezeigte Steuer- und Auswerteeinrichtung 169 des Vorladegeräts 160 ist gemäß vorheriger Beschreibung dazu eingerichtet, von dem zuvor beschriebenen Zustand der Schaltvorrichtung 400 ausgehend zunächst nur das elektrische Zuschalten des Plusleiters 161 zu dem Plusleiter 8' des Gleichspannungsschaltgeräts 100', d.h. nur das elektrische Zuschalten des einen Leiters des Vorladegeräts 160, in welchem die Strommesseinrichtung 163 und die Strombegrenzungseinrichtung 164 angeordnet sind, zu dem entsprechenden Leiter des Gleichspannungsschaltgeräts 100', zu veranlassen, daraufhin den von der Strommesseinrichtung 163 erfassten Stromfluss in dem Plusleiter 161 hinsichtlich des Vorliegens eines Erdschlusses auszuwerten und dann gegebenenfalls das Abbrechen des Einschaltvorgangs der Schaltvorrichtung 400 zu veranlassen, falls ein Erdschluss erkannt wird.

Vorteilhaft hierbei ist, dass das Erkennen eines Erdschlusses ohne Vorliegen eines Stromflusses innerhalb des Gleichspannungsschaltgeräts 100' erfolgen kann. Dadurch werden die elektrischen Bauteile des Gleichspannungsschaltgeräts 100', wie beispielsweise die elektromechanischen Schalter 108', 110', im Rahmen des Erkennens eines Erdschlusses keinem zusätzlichen Verschleiß ausgesetzt. Weiterhin ermöglicht die erfindungsgemäße Schaltvorrichtung 400, dass ein Erkennen eines Erdschlusses erfolgen kann, auch wenn ein Gleichspannungsschaltgerät 100' keine darin integrierte Vorladeschaltung umfasst. In diesem Fall kann ein separates Vorladegerät 160 wie zuvor beschrieben zum Erkennen eines Erdschlusses auf einfache Weise zugeschaltet werden, welches zudem für den Fall, dass kein Erdschluss erkannt wird, zum Aufladen von ausgangsseitigen Kapazitäten verwendet werden kann.

Gemäß einer Weiterentwicklung kann die Steuer- und Auswerteeinrichtung 169 der Schaltvorrichtung 400 entsprechend der Steuer- und Auswerteeinrichtung 150 gemäß Figuren 1-5 dazu eingerichtet sein, einen Erdschluss des Plusleiters 161 oder des Minusleiters 162 durch ein Überschreiten eines von der Strommesseinrichtung 163 erfassten Stromflusses von einen Referenzwert von im Wesentlichen null Ampere zu erkennen. Wie bereits zuvor beschrieben, sollte die Strommesseinrichtung 163 keinen Stromfluss bzw. einen Stromfluss von im Wesentlichen null Ampere erfassen, wenn kein Erdschluss vorliegt, da aufgrund der geöffneten Schaltelemente 168, 110' kein geschlossener Stromkreis vorliegt. Dies ändert sich jedoch durch einen Erdschluss des Plusleiters 8' oder des Minusleiters 10' des Gleichspannungsschaltgeräts 100', sodass der von der Strommesseinrichtung 163 erfasste Stromfluss infolge eines Erdschlusses einen Referenzwert von null Ampere überschreitet.

Die in Figur 7 dargestellte Steuer- und Auswerteeinrichtung 169 der Schaltvorrichtung 400 ist ferner insbesondere dazu eingerichtet, das Abbrechen des Einschaltvorgangs der Schaltvorrichtung 400 zu veranlassen, indem sie das elektrische Abschalten des zuvor zugeschalteten Plusleiters 161 oder Minusleiters 162 des Vorladegeräts 160, in welchem die Strommesseinrichtung 163 und die Strombegrenzungseinrichtung 164 angeordnet sind, veranlasst, und somit im Hinblick auf die in Figur 7 gezeigte Ausführungsform, indem sie das elektrische Abschalten des Plusleiters 161, insbesondere mittels Schließen des elektromechanischen Schalters 166, veranlasst.

Darüberhinausgehend ist die Steuer- und Auswerteeinrichtung 169 der Schaltvorrichtung 400 insbesondere dazu eingerichtet, das Fortsetzen des Einschaltvorgangs der Schaltvorrichtung 400 zu veranlassen, wenn sie keinen Erdschluss des Plusleiters 161 oder des Minusleiters 162 erkennt. In diesem Fall ist die Steuer- und Auswerteeinrichtung 169 dazu eingerichtet, zunächst das elektrische Zuschalten des noch abgeschalteten Plusleiters 161 oder Minusleiters 162 des Vorladegeräts 160 parallel zu dem entsprechenden Plusleiter 8' oder Minusleiter 10' des Gleichspannungsschaltgeräts 100' zum elektrischen Zuschalten des Vorladegeräts 160 zu veranlassen, d.h. gemäß Figur 7 das elektrische Zuschalten des noch abgeschalteten Minusleiters 162 parallel zu dem Minusleiter 10', und zwar insbesondere durch Schließen des elektromechanischen Schalters 168, um Kapazitäten auf der Ausgangsseite der Schaltvorrichtung 400 aufzuladen, und anschließend das Schließen der elektromechanischen Schalter 108', 110'des Gleichspannungsschaltgeräts 100' zu veranlassen. Der Einschaltvorgang kann insbesondere derart fortgesetzt werden, dass der Einschaltvorgang mit dem Einschalten der angeschlossenen Gleichspannungslast 200 beendet wird.

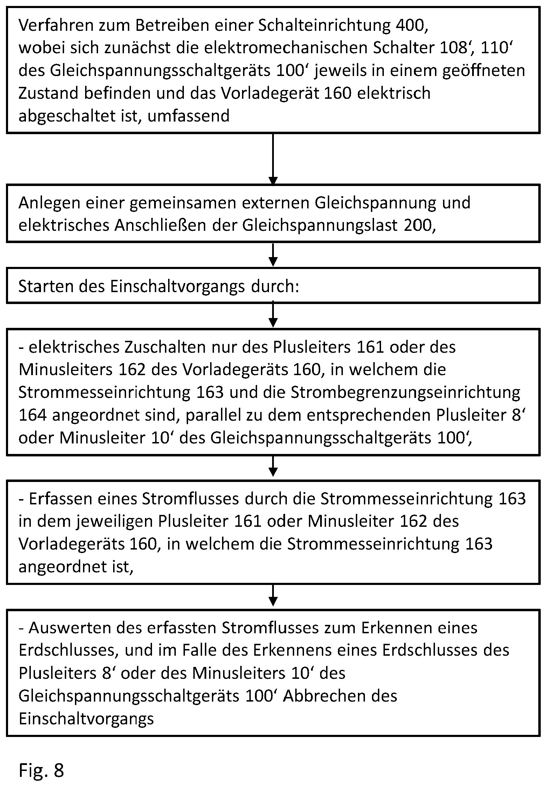

Figur 8 zeigt in schematischer Weise ein Flussdiagramm eines beispielhaften Verfahrensablaufs zum Betreiben einer Schaltvorrichtung, wie zuvor beschrieben und beispielsweise in Figur 7 skizziert, und insbesondere zum Erkennen eines Erdschlusses während eines Einschaltvorgangs zum Einschalten einer zuvor anzuschließenden bzw. angeschlossenen Gleichspannungslast 200 mittels der Schaltvorrichtung 400. Ausgehend von einem Zustand der Schaltvorrichtung 400, in welchem sich zunächst die elektromechanischen Schalter 108', 110' des Gleichspannungsschaltgeräts 100' jeweils in einem geöffneten Zustand befinden und das Vorladegerät 160 elektrisch abgeschaltet ist, umfasst das Verfahren das Anlegen einer gemeinsamen externen Gleichspannung an die jeweiligen Eingangsanschlüsse IN+, IN- des Gleichspannungsschaltgeräts 100' und des Vorladegeräts 160 und das elektrische Anschließen der Gleichspannungslast 200 an die jeweiligen Ausgangsanschlüsse OUT+, OUT- des Gleichspannungsschaltgeräts 100' und des Vorladegeräts 160 sowie das Starten eines Einschaltvorgangs. Der Einschaltvorgang wird im Rahmen des Verfahrens gestartet durch ein elektrisches Zuschalten nur des Plusleiters 161 oder des Minusleiters 162 des Vorladegeräts 160, in welchem die Strommesseinrichtung 163 und die Strombegrenzungseinrichtung 164 angeordnet sind, parallel zu dem entsprechenden Plusleiter 8' oder Minusleiter 10' des Gleichspannungsschaltgeräts 100'. Daraufhin ist im Rahmen des Verfahrens ein Erfassen eines Stromflusses durch die Strommesseinrichtung 163 in dem jeweiligen Plusleiter 161 oder Minusleiter 162 des Vorladegeräts 160, in welchem die Strommesseinrichtung 163 angeordnet ist, vorgesehen. Ferner erfolgt ein Auswerten des erfassten Stromflusses zum Erkennen eines Erdschlusses, wobei im Falle des Erkennens eines Erdschlusses des Plusleiters 8' oder des Minusleiters 10' des Gleichspannungsschaltgeräts 100' ein Abbrechen des Einschaltvorgangs umfasst ist. Das Abbrechen des Einschaltvorgangs kann insbesondere durch elektrisches Abschalten des zuvor zugeschalteten Plusleiters 161 oder Minusleiters 162 des Vorladegeräts 160, in welchem die Strommesseinrichtung 163 und die Strombegrenzungseinrichtung 164 angeordnet sind, erfolgen. Ergänzend oder alternativ dazu kann der Einschaltvorgang für den Fall, dass kein Erdschluss des Plusleiters 161 oder des Minusleiters 162 erkannt wird, durch ein elektrisches Zuschalten des noch abgeschalteten Plusleiters 161 oder Minusleiters 162 des Vorladegeräts 160 parallel zu dem entsprechenden Plusleiter 8' oder Minusleiter 10' des Gleichspannungsschaltgeräts 100' zum elektrischen Zuschalten des Vorladegeräts 160 und Aufladen von Kapazitäten auf der Ausgangsseite der Schaltvorrichtung 400 und durch anschließendes Schließen der elektromechanischen Schalter 108', 110' des Gleichspannungsschaltgeräts 100' fortgesetzt werden. Ferner kann im Rahmen des Verfahrens vorgesehen sein, dass bei dem Fortsetzen des Einschaltvorgangs ferner ein in dem Plusleiter 8' oder in dem Minusleiter 10' des Gleichspannungsschaltgeräts 100' angeordnetes halbleiterbasiertes, ansteuerbares Schaltelement 101', wie beispielsweise in Figur 7 abgebildet, geschlossen wird.

Zusammenfassend bietet die vorliegende Erfindung eine Lösung dafür, einen Erdschluss auf der Ausgangsseite des Gleichspannungsschaltgeräts 100, 100' bereits während eines Einschaltvorgangs zum Einschalten einer Gleichspannungslast 200 und insbesondere vor Abschluss dieses Einschaltvorgangs in einem strombegrenzten Modus auf einfache Weise zu erkennen. Der wesentliche Kern der erfindungsgemäßen Lösung liegt in einer festgelegten Einschaltsequenz bestimmter elektrischer Bauteile, wobei entweder ein elektrisches Zuschalten einer von dem Gleichspannungsschaltgerät 100 umfassten und somit darin integrierten Vorladeschaltung 105, wie in den Ausführungsformen der Figuren 1-6 gezeigt, oder ein elektrisches Zuschalten nur eines Leiters 161, 162 eines separaten Vorladegeräts 160, wie in den Ausführungsformen der Figuren 7 und 8 skizziert, gefolgt von einem Erfassen eines Stromflusses zum Erkennen eines Erdschlusses in einem strombegrenzten Modus vorgesehen ist. Zum Durchführen der festgelegten Einschaltsequenz ist jeweils eine Steuer- und Auswerteeinrichtung 150, 169 vorgesehen, die insbesondere als FPGA oder Microcontroller ausgebildet sein kann. Beispielsweise kann die Steuer- und Auswerteeinrichtung 150, 169 eine Speichereinheit umfassen, in welcher die festgelegte Einschaltsequenz hinterlegt ist. Wird ein Erdschluss eines Leiters 8, 10, 8', 10' des Gleichspannungsschaltgeräts 100, 100' erkannt, ist ein Abbrechen des Einschaltvorgangs vorgesehen, sodass eine Beschädigung und ein Verschleiß von den entsprechenden, im Rahmen des Einschaltvorgangs beteiligten elektrischen Bauteilen vermieden werden kann. Das Abbrechen des Einschaltvorgangs führt dazu, dass ein Einschalten der angeschlossenen Gleichspannungslast 200 verhindert wird, d.h. der Einschaltvorgang wird nicht beendet.

### Bezugszeichenliste

- 4: Gleichspannungsquelle
- 4a: Gleichspannungsbus
- 5: Wechselspannungsnetz
- 8: Plusleiter
- 10: Minusleiter
- 8': Plusleiter
- 10': Minusleiter
- 100: Gleichspannungsschaltgerät
- 100': Gleichspannungsschaltgerät der Schaltvorrichtung
- 101: erstes Schaltelement
- 103: Schalteinrichtung
- 104: Strombegrenzungseinrichtung
- 105: Vorladeschaltung
- 106: Diode
- 108: erster elektromechanischer Schalter
- 110: zweiter elektromechanischer Schalter
- 108': elektromechanischer Schalter
- 110': elektromechanischer Schalter
- 116: Strommesseinrichtung
- 120: Gehäuse
- 150: Steuer- und Auswerteeinrichtung
- 160: Vorladegerät der Schaltvorrichtung
- 161: Plusleiter des Vorladegeräts
- 162: Minusleiter des Vorladegeräts
- 163: Strommesseinrichtung des Vorladegeräts
- 164: Strombegrenzungseinrichtung des Vorladegeräts
- 166: elektromechanischer Schalter
- 168: elektromechanischer Schalter
- 169: Steuer- und Auswerteeinrichtung der Schaltvorrichtung
- 200: Gleichspannungslast
- 300: Schaltsystem
- 400: Schaltvorrichtung
- 420: Gehäuse
- IN+: erster Eingangsanschluss
- IN-: zweiter Eingangsanschluss
- OUT+: erster Ausgangsanschluss
- OUT-: zweiter Ausgangsanschluss

## Patentansprüche

1. Gleichspannungsschaltgerät (100) zur Erdschlusserkennung während eines Einschaltvorgangs zum Einschalten einer angeschlossenen Gleichspannungslast (200), umfassend:
- einen ersten und einen zweiten Eingangsanschluss (IN+, IN-), die zum Anlegen einer externen Gleichspannung ausgebildet sind,
- einen ersten und einen zweiten Ausgangsanschluss (OUT+, OUT-), die zum elektrischen Anschließen der Gleichspannungslast (200) ausgebildet sind,
- einen Plusleiter (8), der zwischen dem ersten Eingangsanschluss (IN+) und dem ersten Ausgangsanschluss (OUT+) verläuft,
- einen Minusleiter (10), der zwischen dem zweiten Eingangsanschluss (IN-) und dem zweiten Ausgangsanschluss (OUT-) verläuft,
- ein erstes halbleiterbasiertes, ansteuerbares Schaltelement (101),
- eine Strommesseinrichtung (116),
- einen ersten elektromechanischen Schalter (108),
- einen zweiten elektromechanischen Schalter (110),
- eine elektrisch zu- und abschaltbare Vorladeschaltung (105), welche eine Strombegrenzungseinrichtung (104) umfasst, und
- eine Steuer- und Auswerteeinrichtung (150),
wobei die Strommesseinrichtung (116), das erste Schaltelement (101) und der erste elektromechanische Schalter (108) in dem Plusleiter (8) oder in dem Minusleiter (10) angeordnet sind, während der zweite elektromechanische Schalter (110) in dem jeweils anderen Leiter angeordnet ist, und
wobei die Steuer- und Auswerteeinrichtung (150) dazu eingerichtet ist,
zu Beginn eines Einschaltvorgangs des Gleichspannungsschaltgeräts (100), zu dem eine externe Gleichspannung an die Eingangsanschlüsse (IN+, IN-) angelegt ist, eine Gleichspannungslast (200) an die Ausgangsanschlüsse (OUT+, OUT-) elektrisch angeschlossen ist, sich das erste Schaltelement (101) und der erste und zweite elektromechanische Schalter (108, 110) jeweils in einem geöffneten Zustand befinden und die Vorladeschaltung (105) abgeschaltet ist, nur das Schließen des ersten elektromechanischen Schalters (108) zu veranlassen,
anschließend das elektrische Zuschalten der Vorladeschaltung (105) parallel zu dem ersten Schaltelement (101) zu veranlassen,
einen von der Strommesseinrichtung (116) im Plusleiter (8) oder im Minusleiter (10) erfassten Stromfluss zum Erkennen eines Erdschlusses auszuwerten,
und im Falle eines erkannten Erdschlusses des Plusleiters (8) oder des Minusleiters (10) das Abbrechen des Einschaltvorgangs des Gleichspannungsschaltgeräts (100) zu veranlassen.

2. Gleichspannungsschaltgerät (100) gemäß Anspruch 1, wobei die Steuer- und Auswerteeinrichtung (150) dazu eingerichtet ist, einen Erdschluss des Plusleiters (8) oder des Minusleiters (10) durch ein Überschreiten eines von der Strommesseinrichtung (116) erfassten Stromflusses von einen Referenzwert von im Wesentlichen null Ampere zu erkennen.

3. Gleichspannungsschaltgerät (100) gemäß Anspruch 1 oder 2, wobei die Vorladeschaltung (105) zum Aufladen von Kapazitäten auf der Ausgangsseite des Gleichspannungsschaltgeräts (100) eingerichtet ist, wenn sich das Gleichspannungsschaltgerät (100) in einem Zustand befindet, in welchem die Vorladeschaltung (105) elektrisch zugeschaltet ist und der erste und zweite elektromechanische Schalter (108, 110) geschlossen sind.

4. Gleichspannungsschaltgerät (100) gemäß einem der Ansprüche 1 bis 3, wobei die Steuer- und Auswerteeinrichtung (150) ferner dazu eingerichtet ist, das Abbrechen des Einschaltvorgangs zu veranlassen, indem die Steuer- und Auswerteeinrichtung (150) das elektrische Abschalten der Vorladeschaltung (105) und dann das Öffnen des ersten elektromechanischen Schalters (108) veranlasst.

5. Gleichspannungsschaltgerät (100) gemäß einem der Ansprüche 1 bis 4, wobei die Steuer- und Auswerteeinrichtung (150) ferner dazu eingerichtet ist, das Fortsetzen des Einschaltvorgangs des Gleichspannungsschaltgeräts (100) zu veranlassen, wenn sie keinen Erdschluss des Plusleiters (8) oder des Minusleiters (10) erkennt, indem die Steuer- und Auswerteeinrichtung (150)
- das elektrische Abschalten der Vorladeschaltung (105),
- das Schließen des zweiten elektromechanischen Schalters (110),
- das erneute elektrische Zuschalten der Vorladeschaltung (105) zum Aufladen von Kapazitäten auf der Ausgangsseite des Gleichspannungsschaltgeräts (100), und
- zuletzt das Schließen des ersten Schaltelements (101) veranlasst.

6. Gleichspannungsschaltgerät (100) gemäß einem der Ansprüche 1 bis 5, wobei das erste Schaltelement (101) zwei antiseriell geschaltete Halbleiterschalter umfasst.

7. Gleichspannungsschaltgerät (100) gemäß einem der Ansprüche 1 bis 6, wobei
der Plusleiter (8) und der Minusleiter (10) als Leiterbahnen auf einer Platine ausgeführt sind und/oder
wobei der erste und zweite elektromechanische Schalter (108, 110) als Relais ausgebildet sind.

8. Schaltsystem (300) umfassend ein Gleichspannungsschaltgerät (100) gemäß einem der Ansprüche 1 bis 7, eine an die Ausgangsanschlüsse (OUT+, OUT-) des Gleichspannungsschaltgeräts (100) elektrisch angeschlossene Gleichspannungslast (200) und eine an die Eingangsanschlüsse (IN+, IN-) des Gleichspannungsschaltgeräts (100) elektrisch angeschlossene Gleichspannungsquelle (4), welche insbesondere als Gleichspannungsbus (4a) ausgebildet ist.

9. Schaltvorrichtung (400)
zur Erdschlusserkennung während eines Einschaltvorgangs zum Einschalten einer angeschlossenen Gleichspannungslast (200), umfassend ein Gleichspannungsschaltgerät (100') und ein parallel zu dem Gleichspannungsschaltgerät (100') elektrisch zu- und abschaltbares Vorladegerät (160),
wobei das Gleichspannungsschaltgerät (100') und das Vorladegerät (160) jeweils aufweisen:
- einen ersten und einen zweiten Eingangsanschluss (IN+, IN-), die zum Anlegen einer gemeinsamen externen Gleichspannung ausgebildet sind,
- einen ersten und einen zweiten Ausgangsanschluss (OUT+, OUT-), die zum elektrischen Anschließen der Gleichspannungslast (200) ausgebildet sind,
- einen Plusleiter (8', 161), der zwischen dem ersten Eingangsanschluss (IN+) und dem ersten Ausgangsanschluss (OUT+) verläuft,
- einen Minusleiter (10', 162), der zwischen dem zweiten Eingangsanschluss (IN-) und dem zweiten Ausgangsanschluss (OUT-) verläuft,
wobei in dem Plusleiter (8') und in dem Minusleiter (10') des Gleichspannungsschaltgeräts (100') jeweils ein elektromechanischer Schalter (108', 110') angeordnet ist und
der Plusleiter (161) des Vorladegeräts (160) parallel zu dem Plusleiter (8') des Gleichspannungsschaltgeräts (100') und der Minusleiter (162) des Vorladegeräts (160) parallel zu dem Minusleiter (10') des Gleichspannungsschaltgeräts (100') jeweils unabhängig voneinander elektrisch zu- und abschaltbar sind,
wobei das Vorladegerät (160) ferner eine Strommesseinrichtung (163) und eine Strombegrenzungseinrichtung (164) aufweist, die beide in dem Plusleiter (161) oder in dem Minusleiter (162) des Vorladegeräts (160) angeordnet sind,
und die Schaltvorrichtung (400) ferner eine Steuer- und Auswerteeinrichtung (169) aufweist, welche dazu eingerichtet ist, zu Beginn eines Einschaltvorgangs der Schaltvorrichtung (400), zu dem eine gemeinsame externe Gleichspannung an die jeweiligen Eingangsanschlüsse (IN+, IN-) angelegt ist, eine Gleichspannungslast (200) an die jeweiligen Ausgangsanschlüsse (OUT+, OUT-) elektrisch angeschlossen ist, sich die elektromechanischen Schalter (108', 110') des Gleichspannungsschaltgeräts (100') jeweils im geöffneten Zustand befinden und das Vorladegerät (160) abgeschaltet ist, nur das elektrische Zuschalten des Plusleiters (161) oder des Minusleiters (162) des Vorladegeräts (160), in welchem die Strommesseinrichtung (163) und die Strombegrenzungseinrichtung (164) angeordnet sind, parallel zu dem entsprechenden Plusleiter (8') oder Minusleiter (10') des Gleichspannungsschaltgeräts (100') zu veranlassen,
einen von der Strommesseinrichtung (163) in dem Plusleiter (161) oder in dem Minusleiter (162) des Vorladegeräts (160) erfassten Stromfluss zum Erkennen eines Erdschlusses auszuwerten,
und im Falle eines erkannten Erdschlusses des Plusleiters (8') oder des Minusleiters (10') des Gleichspannungsschaltgeräts (100') das Abbrechen des Einschaltvorgangs der Schaltvorrichtung (400) zu veranlassen.

10. Schaltvorrichtung (400) gemäß Anspruch 9, wobei die Steuer- und Auswerteeinrichtung (169) dazu eingerichtet ist, einen Erdschluss des Plusleiters (161) oder des Minusleiters (162) durch ein Überschreiten eines von der Strommesseinrichtung (163) erfassten Stromflusses von einen Referenzwert von im Wesentlichen null Ampere zu erkennen.

11. Schaltvorrichtung (400) gemäß Anspruch 9 oder 10, wobei die Steuer- und Auswerteeinrichtung (169) ferner dazu eingerichtet ist,
das Abbrechen des Einschaltvorgangs der Schaltvorrichtung (400) zu veranlassen, indem die Steuer- und Auswerteeinrichtung (169) das elektrische Abschalten des zuvor zugeschalteten Plusleiters (161) oder Minusleiters (162) des Vorladegeräts (160), in welchem die Strommesseinrichtung (163) und die Strombegrenzungseinrichtung (164) angeordnet sind, veranlasst, und/oder
das Fortsetzen des Einschaltvorgangs der Schaltvorrichtung (400) zu veranlassen, wenn sie keinen Erdschluss des Plusleiters (161) oder des Minusleiters (162) erkennt, indem die Steuer- und Auswerteeinrichtung (169)
- zunächst das elektrische Zuschalten des noch abgeschalteten Plusleiters (161) oder Minusleiters (162) des Vorladegeräts (160) parallel zu dem entsprechenden Plusleiter (8') oder Minusleiter (10') des Gleichspannungsschaltgeräts (100') zum elektrischen Zuschalten des Vorladegeräts (160) veranlasst, um Kapazitäten auf der Ausgangsseite der Schaltvorrichtung (400) aufzuladen, und
- anschließend das Schließen der elektromechanischen Schalter (108', 110') des Gleichspannungsschaltgeräts (100') veranlasst.

12. Gleichspannungsschaltgerät (100) gemäß einem der Ansprüche 1 bis 7 oder Schaltvorrichtung (400) gemäß einem der Ansprüche 9 bis 11, wobei die Strombegrenzungseinrichtung (104, 164) zumindest einen ohmschen Widerstand oder zumindest einen Tiefsetzsteller aufweist.

13. Verfahren zum Betreiben eines Gleichspannungsschaltgeräts (100) gemäß einem der Ansprüche 1 bis 7,
wobei sich zunächst das erste Schaltelement (101) und der erste und zweite elektromechanische Schalter (108, 110) jeweils in einem geöffneten Zustand befinden und die Vorladeschaltung (105) elektrisch abgeschaltet ist,
mit den Schritten:
- Anlegen einer externen Gleichspannung an die Eingangsanschlüsse (IN+, IN-) des Gleichspannungsschaltgeräts (100) und elektrisches Anschließen der Gleichspannungslast (200) an die Ausgangsanschlüsse (OUT+, OUT-) des Gleichspannungsschaltgeräts (100),
- Starten eines Einschaltvorgangs durch
Schließen nur des ersten elektromechanischen Schalters (108) des Gleichspannungsschaltgeräts (100),
anschließendes elektrisches Zuschalten der Vorladeschaltung (105),
Erfassen eines Stromflusses durch die Strommesseinrichtung (116) in dem jeweiligen Plusleiter (8) oder Minusleiter (10), in welchem die Strommesseinrichtung (116) angeordnet ist,
Auswerten des erfassten Stromflusses zum Erkennen eines Erdschlusses, und
im Falle des Erkennens eines Erdschlusses des Plusleiters (8) oder des Minusleiters (10) Abbrechen des Einschaltvorgangs.

14. Verfahren gemäß Anspruch 13, wobei
der Einschaltvorgang durch elektrisches Abschalten der Vorladeschaltung (105) und Öffnen des ersten elektromechanischen Schalters (108) des Gleichspannungsschaltgeräts (100) abgebrochen wird, und/oder der Einschaltvorgang für den Fall, dass kein Erdschluss des Plusleiters (8) oder des Minusleiters (10) erkannt wird, durch
elektrisches Abschalten der Vorladeschaltung (105),
Schließen des zweiten elektromechanischen Schalters (110),
erneutes elektrisches Zuschalten der Vorladeschaltung (105) zum Aufladen von Kapazitäten auf der Ausgangsseite des Gleichspannungsschaltgeräts (100), und
zuletzt Schließen des ersten Schaltelements (101)
fortgesetzt wird.

15. Verfahren zum Betreiben einer Schaltvorrichtung (400) gemäß einem der Ansprüche 9 bis 11,
wobei sich zunächst die elektromechanischen Schalter (108', 110') des Gleichspannungsschaltgeräts (100') jeweils in einem geöffneten Zustand befinden und das Vorladegerät (160) elektrisch abgeschaltet ist,
mit den Schritten:
- Anlegen einer gemeinsamen externen Gleichspannung an die jeweiligen Eingangsanschlüsse (IN+, IN-) des Gleichspannungsschaltgeräts (100') und des Vorladegeräts (160) und elektrisches Anschließen der Gleichspannungslast (200) an die jeweiligen Ausgangsanschlüsse (OUT+, OUT-) des Gleichspannungsschaltgeräts (100') und des Vorladegeräts (160),
- Starten eines Einschaltvorgangs durch
elektrisches Zuschalten nur des Plusleiters (161) oder des Minusleiters (162) des Vorladegeräts (160), in welchem die Strommesseinrichtung (163) und die Strombegrenzungseinrichtung (164) angeordnet sind, parallel zu dem entsprechenden Plusleiter (8') oder Minusleiter (10') des Gleichspannungsschaltgeräts (100'),
Erfassen eines Stromflusses durch die Strommesseinrichtung (163) in dem jeweiligen Plusleiter (161) oder Minusleiter (162) des Vorladegeräts (160), in welchem die Strommesseinrichtung (163) angeordnet ist,
Auswerten des erfassten Stromflusses zum Erkennen eines Erdschlusses, und
im Falle des Erkennens eines Erdschlusses des Plusleiters (8') oder des Minusleiters (10') des Gleichspannungsschaltgeräts (100') Abbrechen des Einschaltvorgangs.

16. Verfahren gemäß Anspruch 15, wobei
der Einschaltvorgang durch elektrisches Abschalten des zuvor zugeschalteten Plusleiters (161) oder Minusleiters (162) des Vorladegeräts (160), in welchem die Strommesseinrichtung (163) und die Strombegrenzungseinrichtung (164) angeordnet sind, abgebrochen wird, und/oder
der Einschaltvorgang für den Fall, dass kein Erdschluss des Plusleiters (161) oder des Minusleiters (162) erkannt wird, durch
elektrisches Zuschalten des noch abgeschalteten Plusleiters (161) oder Minusleiters (162) des Vorladegeräts (160) parallel zu dem entsprechenden Plusleiter (8') oder Minusleiter (10') des Gleichspannungsschaltgeräts (100') zum elektrischen Zuschalten des Vorladegeräts (160) und Aufladen von Kapazitäten auf der Ausgangsseite der Schaltvorrichtung (400), und
anschließendes Schließen der elektromechanischen Schalter (108', 110') des Gleichspannungsschaltgeräts (100')
fortgesetzt wird.

17. Verfahren gemäß Anspruch 16, wobei
bei dem Fortsetzen des Einschaltvorgangs ferner ein in dem Plusleiter (8') oder in dem Minusleiter (10') des Gleichspannungsschaltgeräts (100') angeordnetes halbleiterbasiertes, ansteuerbares Schaltelement (101') geschlossen wird.

## Claims

1. A DC switching device (100) for detecting a ground fault during a turn-on operation to turn on a connected DC load (200), comprising:
- a first and a second input terminal (IN+, IN-) configured to apply an external DC voltage,
- a first and a second output terminal (OUT+, OUT-) configured to electrically connect the DC load (200),
- a positive conductor (8) extending between the first input terminal (IN+) and the first output terminal (OUT+),
- a negative conductor (10) extending between the second input terminal (IN-) and the second output terminal (OUT-),
- a first semiconductor-based controllable switching element (101),
- a current measuring device (116),
- a first electromechanical switch (108),
- a second electromechanical switch (110),
- a precharge circuit (105) that can be electrically switched on and off, comprising a current-limiting device (104), and
- a control and evaluation device (150),
wherein the current measuring device (116), the first switching element (101), and the first electromechanical switch (108) are arranged in the positive conductor (8) or in the negative conductor (10), while the second electromechanical switch (110) is arranged in the respective other conductor, and
wherein the control and evaluation device (150) is configured
to cause at the start of a switching-on operation of the DC switching device (100), during which an external DC voltage is applied to the input terminals (IN+, IN-), a DC load (200) is electrically connected to the output terminals (OUT+, OUT-), the first switching element (101) and the first and second electromechanical switches (108, 110) are each in an open state, and the precharge circuit (105) is switched off, only the closing of the first electromechanical switch (108),
to subsequently cause the electrical connection of the precharge circuit (105) in parallel with the first switching element (101),
to evaluate current flow detected by the current measuring device (116) in the positive conductor (8) or in the negative conductor (10) to detect a ground fault,
and, in the event of a detected ground fault in the positive conductor (8) or the negative conductor (10), to cause termination of the turn-on operation of the DC switching device (100).

2. The DC switching device (100) according to claim 1, wherein the control and evaluation device (150) is configured to detect a ground fault in the positive conductor (8) or the negative conductor (10) when a current flow detected by the current measurement device (116) exceeds a reference value of substantially zero amperes.

3. The DC switching device (100) according to claim 1 or 2, wherein the precharge circuit (105) is configured to charge capacitors on the output side of the DC switching device (100) when the DC switching device (100) is in a state in which the precharge circuit (105) is electrically switched on and the first and second electromechanical switches (108, 110) are closed.

4. The DC switching device (100) according to any one of claims 1 to 3, wherein the control and evaluation unit (150) is further configured to cause termination of the turn-on operation by having the control and evaluation unit (150) cause the electrical switching off of the precharge circuit (105) and then the opening of the first electromechanical switch (108).

5. The DC switching device (100) according to any one of claims 1 to 4, wherein the control and evaluation unit (150) is further configured to cause the continuation of the turn-on operation of the DC switching device (100) if it does not detect a ground fault in the positive conductor (8) or the negative conductor (10), by having the control and evaluation device (150) cause
- the electrical switching off of the precharge circuit (105),
- closing the second electromechanical switch (110),
- the electrical re-switching on of the precharge circuit (105) to charge capacitors on the output side of the DC switching device (100), and
- and finally, the closing of the first switching element (101).

6. The DC switching device (100) according to any one of the claims 1 to 5, wherein the first switching element (101) comprises two semiconductor switches connected in anti-series.

7. The DC switching device (100) according to any one of claims 1 to 6, wherein the positive conductor (8) and the negative conductor (10) are implemented as conductor traces on a printed circuit board and/or
wherein the first and second electromechanical switches (108, 110) are designed as relays.

8. A switching system (300) comprising a DC switching device (100) according to any one of claims 1 to 7, a DC load (200) electrically connected to the output terminals (OUT+, OUT-) of the DC switching device (100), and a DC source (4) electrically connected to the input terminals (IN+, IN-) of the DC switching device (100), which is specifically configured as a DC bus (4a).

9. A switching device (400) for detecting a ground fault during a turn-on operation to turn on a connected DC load (200), comprising a DC switching device (100') and a pre-charger (160) that can be electrically connected to and disconnected from the DC switching device (100') in parallel,
wherein the DC switching device (100') and the precharge device (160) each comprise:
- a first and a second input terminal (IN+, IN-) configured to receive a common external DC voltage,
- a first and a second output terminal (OUT+, OUT-) configured for electrically connecting the DC load (200),
- a positive conductor (8', 161) running between the first input terminal (IN+) and the first output terminal (OUT+),
- a negative conductor (10', 162) running between the second input terminal (IN-) and the second output terminal (OUT-),
wherein an electromechanical switch (108', 110') is arranged in each of the positive conductor (8') and the negative conductor (10') of the DC switching device (100'), and
the positive conductor (161) of the pre-charger (160) and the negative conductor (162) of the pre-charger (160) are independent from each other electrically connectable in parallel to and disconnectable from the positive conductor (8') of the DC switching device (100') and the negative conductor (10') of the DC switching device (100'), respectively,
wherein the pre-charger (160) further comprises a current measuring device (163) and a current limiting device (164), both of which are arranged in the positive conductor (161) or in the negative conductor (162) of the pre-charger (160),
and the switching device (400) further comprises a control and evaluation device (169), which is configured to cause, at the start of a turning-on operation of the switching device (400), during which a common external DC voltage is applied to the respective input terminals (IN+, IN), a DC voltage load (200) is electrically connected to the respective output terminals (OUT+, OUT-), the electromechanical switches (108', 110') of the DC switching device (100') are each in the open state, and the pre-charger (160) is disconnected, only the electrical connection of the positive conductor (161) or the negative conductor (162) of the pre-charger (160), in which the current measuring device (163) and the current limiting device (164) are arranged, in parallel with the corresponding positive conductor (8') or negative conductor (10') of the DC switching device (100'),
to evaluate a current flow detected by the current measuring device (163) in the positive conductor (161) or in the negative conductor (162) of the pre-charger (160) to detect a ground fault,
and to cause in the event of a detected ground fault in the positive conductor (8') or the negative conductor (10') of the DC switching device (100') termination of the turn-on operation of the switching device (400).

10. The switching device (400) according to claim 9, wherein the control and evaluation unit (169) is configured to detect a ground fault in the positive conductor (161) or the negative conductor (162) when the current flow detected by the current measurement unit (163) exceeds a reference value of substantially zero amperes.

11. The switching device (400) according to claim 9 or 10, wherein the control and evaluation unit (169) is further configured to
cause the termination of the turn-on operation of the switching device (400) by having the control and evaluation device (169) cause the electrical disconnection of the previously connected positive conductor (161) or negative conductor (162) of the pre-charger (160), in which the current measuring device (163) and the current limiting device (164) are located, and/or
to cause the continuation of the turn-on operation of the switching device (400) to if it does not detect a ground fault in the positive conductor (161) or the negative conductor (162), by having the control and evaluation device (169)
- first cause the electrical connection of the positive conductor (161) or negative conductor (162) of the pre-charger (160), which is still disconnected, in parallel with the corresponding positive conductor (8') or negative conductor (10') of the DC switching device (100') to electrically connect the pre-charger (160), in order to charge capacitors on the output side of the switching device (400), and
- to cause subsequently the closing of the electromechanical switches (108', 110') of the DC switching device (100').

12. The DC switching device (100) according to any one of claims 1 to 7, or a the switching device (400) according to any one of claims 9 to 11, wherein the current-limiting means (104, 164) comprises at least one resistive element or at least one stepdown converter.

13. A method for operating a DC switching device (100) according to any one of claims 1 to 7,
wherein initially the first switching element (101) and the first and second electromechanical switches (108, 110) are each in an open state and the precharge circuit (105) is electrically disconnected,
comprising the steps of:
- applying an external DC voltage to the input terminals (IN+, IN-) of the DC switching device (100) and electrically connecting the DC load (200) to the output terminals (OUT+, OUT-) of the DC switching device (100),
- starting a turn-on operation by
closing only the first electromechanical switch (108) of the DC switching device (100),
electrically connecting subsequently the pre-charge circuit (105),
detecting a current flow through the current measuring device (116) in the respective positive conductor (8) or negative conductor (10) in which the current measuring device (116) is located,
evaluating the detected current flow to detect a ground fault, and
terminating, if a ground fault is detected in the positive conductor (8) or the negative conductor (10), the turn-on operation.

14. The method according to claim 13, wherein
the turn-on operation is terminated by electrically disconnecting the precharge circuit (105) and opening the first electromechanical switch (108) of the DC switching device (100), and/or
if no ground fault of the positive conductor (8) or the negative conductor (10) is detected, the turn-on process is continued by
electrically disconnecting the precharge circuit (105),
closing the second electromechanical switch (110),
electrically re-connecting the precharge circuit (105) to charge capacitors on the output side of the DC switching device (100), and
finally, closing the first switching element (101).

15. The method for operating a switching device (400) according to any one of claims 9 to 11,
wherein, initially, the electromechanical switches (108', 110') of the DC switching device (100') are each in an open state and the pre-charger (160) is electrically disconnected,
comprising the steps of:
- applying a common external DC voltage to the respective input terminals (IN+, IN-) of the DC switching device (100') and the pre-charger (160), and electrically connecting the DC load (200) to the respective output terminals (OUT+, OUT-) of the DC switching device (100') and the pre-charger (160),
- starting a turn-on operation by
electrically connecting only the positive conductor (161) or the negative conductor (162) of the pre-charger (160), in which the current measuring device (163) and the current limiting device (164) are located, in parallel with the corresponding positive conductor (8') or negative conductor (10') of the DC switching device (100'),
detecting a current flow through the current measuring device (163) in the respective positive conductor (161) or negative conductor (162) of the pre-charger (160) in which the current measuring device (163) is located,
evaluating the detected current flow to detect a ground fault, and
in the event of detecting a ground fault in the positive conductor (8') or the negative conductor (10') of the DC switching device (100'), terminating the turn-on operation.

16. The method according to claim 15, wherein
the turn-on operation is terminated by electrically disconnecting the previously connected positive conductor (161) or negative conductor (162) of the pre-charger (160), in which the current measuring device (163) and the current limiting device (164) are located, and/or
in the event that no ground fault is detected in the positive conductor (161) or the negative conductor (162), the turn-on operation is continued by
electrically connecting the still-disconnected positive conductor (161) or negative conductor (162) of the pre-charger (160) in parallel with the corresponding positive conductor (8') or negative conductor (10') of the DC switching device (100') to electrically connect the pre-charger (160) and charge capacitors on the output side of the switching device (400), and
closing afterwards the electromechanical switches (108', 110') of the DC switching device (100').

17. The method according to claim 16, wherein
during the continuation of the turn-on operation further, a semiconductor-based, controllable switching element (101') arranged in the positive conductor (8') or in the negative conductor (10') of the DC switching device (100') is closed.

## Revendications

1. Appareil de coupure de tension continue (100) pour la détection de défaut à la terre pendant un processus de mise en circuit pour la mise sous tension d'une charge de tension continue (200) connectée, comprenant :
- une première et une seconde borne d'entrée (IN+, IN-) qui sont conçues pour appliquer une tension continue externe,
- une première et une seconde borne de sortie (OUT+, OUT-) qui sont conçues pour connecter électriquement la charge de tension continue (200),
- un conducteur positif (8), lequel s'étend entre la première borne d'entrée (IN+) et la première borne de sortie (OUT+),
- un conducteur négatif (10), lequel s'étend entre la seconde borne d'entrée (IN-) et la seconde borne de sortie (OUT-),
- un premier élément de commutation (101) pouvant être commandé à base de semi-conducteur,
- un équipement de mesure de courant (116),
- un premier commutateur électromécanique (108),
- un second commutateur électromécanique (110),
- un circuit de précharge (105) commutable en marche et arrêt électriquement, lequel comprend un équipement de limitation de courant (104), et
- un équipement de commande et d'évaluation (150),
dans lequel l'équipement de mesure de courant (116), le premier élément de commutation (101) et le premier commutateur électromécanique (108) sont agencés dans le conducteur positif (8) ou dans le conducteur négatif (10), tandis que le second commutateur électromécanique (110) est agencé dans l'autre conducteur respectif, et
dans lequel l'équipement de commande et d'évaluation (150) est en outre conçu,
au début d'un processus de mise sous tension de l'appareil de coupure de tension continue (100), pour lequel une tension continue externe est appliquée aux bornes d'entrée (IN+, IN-), une charge de tension continue (200) est connectée électriquement aux bornes de sortie (OUT+, OUT-), le premier élément de commutation (101) et les premier et second commutateurs électromécaniques (108, 110) sont respectivement à l'état ouvert et le circuit de précharge (105) est à l'arrêt, pour provoquer uniquement la fermeture du premier commutateur électromécanique (108),
puis pour provoquer la mise en marche électrique du circuit de précharge (105) en parallèle avec le premier élément de commutation (101),
pour évaluer un flux de courant détecté par l'équipement de mesure de courant (116) dans le conducteur positif (8) ou dans le conducteur négatif (10) pour détecter un défaut à la terre,
et en cas d'un défaut à la terre reconnu du conducteur positif (8) ou du conducteur négatif (10), pour provoquer l'interruption du processus de mise sous tension de l'appareil de coupure de tension continue (100).

2. Appareil de coupure de tension continue (100) selon la revendication 1, dans lequel l'équipement de commande et d'évaluation (150) est conçu pour reconnaître un défaut à la terre du conducteur positif (8) ou du conducteur négatif (10) par le dépassement d'un flux de courant détecté par l'équipement de mesure de courant (116) d'une valeur de référence de sensiblement zéro ampère.

3. Appareil de coupure de tension continue (100) selon la revendication 1 ou 2, dans lequel le circuit de précharge (105) est conçu pour charger les condensateurs du côté sortie de l'appareil de coupure de tension continue (100) lorsque l'appareil de coupure de tension continue (100) est dans un état dans lequel le circuit de précharge (105) est électriquement mis en marche et les premier et second commutateurs électromécaniques (108, 110) sont fermés.

4. Appareil de coupure de tension continue (100) selon l'une des revendications 1 à 3, dans lequel l'équipement de commande et d'évaluation (150) est en outre conçu pour provoquer l'interruption du processus de mise sous tension en provoquant la mise à l'arrêt électrique du circuit de précharge (105) par l'équipement de commande et d'évaluation (150), puis l'ouverture du premier commutateur électromécanique (108).

5. Appareil de coupure de tension continue (100) selon l'une des revendications 1 à 4, dans lequel l'équipement de commande et d'évaluation (150) est en outre conçu pour provoquer la poursuite du processus de mise sous tension de l'appareil de coupure de tension continue (100) s'il ne détecte pas de défaut à la terre du conducteur positif (8) ou du conducteur négatif (10), en ce que l'équipement de commande et d'évaluation (150) provoque
- la mise à l'arrêt électrique du circuit de précharge (105),
- la fermeture du second commutateur électromécanique (110),
- la remise en marche électrique du circuit de précharge (105) pour charger les capacités du côté sortie de l'appareil de coupure de tension continue (100), et
- finalement la fermeture du premier élément de commutation (101).

6. Appareil de coupure de tension continue (100) selon l'une des revendications 1 à 5, dans lequel le premier élément de commutation (101') comprend deux commutateurs à semi-conducteur connectés en anti-série.

7. Appareil de coupure de tension continue (100) selon l'une des revendications 1 à 6, dans lequel le conducteur positif (8) et le conducteur négatif (10) sont réalisés sous la forme de pistes conductrices sur une carte de circuit et/ou
dans lequel les premier et second commutateurs électromécaniques (108, 110) sont réalisés sous la forme de relais.

8. Système de commutation (300) comprenant un appareil de coupure de tension continue (100) selon l'une des revendications 1 à 7, une charge de tension continue (200) électriquement connectée aux bornes de sortie (OUT+, OUT-) de l'appareil de coupure de tension continue (100) et une source de tension continue (4) électriquement connectée aux bornes d'entrée (IN+, IN-) de l'appareil de coupure de tension continue (100), laquelle source est réalisée en particulier sous la forme d'un bus de tension continue (4a).

9. Dispositif de commutation (400) pour la détection de défaut à la terre lors d'un processus de mise sous tension pour la mise sous tension d'une charge de tension continue (200) connectée, comprenant un appareil de coupure de tension continue (100') et un appareil de précharge (160) qui peut être mis en marche et arrêté électriquement en parallèle avec l'appareil de coupure de tension continue (100'),
dans lequel l'appareil de coupure de tension continue (100') et l'appareil de précharge (160) présentent respectivement :
- une première et une seconde borne d'entrée (IN+, IN-) qui sont conçues pour appliquer une tension continue externe commune,
- une première et une seconde borne de sortie (OUT+, OUT-) qui sont conçues pour connecter électriquement la charge de tension continue (200),
- un conducteur positif (8', 161), lequel s'étend entre la première borne d'entrée (IN+) et la première borne de sortie (OUT+),
- un conducteur négatif (10', 162), lequel s'étend entre la seconde borne d'entrée (IN-) et la seconde borne de sortie (OUT-),
dans lequel un commutateur électromécanique (108', 110') est agencé respectivement dans le conducteur positif (8') et dans le conducteur négatif (10') de l'appareil de coupure de tension continue (100') et
le conducteur positif (161) de l'appareil de précharge (160) en parallèle avec le conducteur positif (8') de l'appareil de coupure de tension continue (100') et le conducteur négatif (162) de l'appareil de précharge (160) en parallèle avec le conducteur négatif (10') de l'appareil de coupure de tension continue (100') peuvent respectivement être mis en marche et arrêté électriquement indépendamment l'un de l'autre,
dans lequel l'appareil de précharge (160) présente en outre un équipement de mesure de courant (163) et un équipement de limitation de courant (164), qui sont tous deux agencés dans le conducteur positif (161) ou dans le conducteur négatif (162) de l'appareil de précharge (160),
et le dispositif de commutation (400) présente en outre un équipement de commande et d'évaluation (169) qui est conçu pour, au début d'un processus de mise sous tension du dispositif de commutation (400), pour lequel une tension continue externe commune est appliquée aux bornes d'entrée (IN+, IN-) respectives, une charge de tension continue (200) est connectée électriquement aux bornes de sortie (OUT+, OUT-) respectives, les commutateurs électromécaniques (108', 110') de l'appareil de coupure de tension continue (100') sont respectivement à l'état ouvert et l'appareil de précharge (160) est à l'arrêt, provoquer uniquement la mise en marche électrique du conducteur positif (161) ou du conducteur négatif (162) de l'appareil de précharge (160), dans lequel l'équipement de mesure de courant (163) et l'équipement de limitation de courant (164) sont agencés, en parallèle avec le conducteur positif (8') ou le conducteur négatif (10') correspondant de l'appareil de coupure de tension continue (100'),
pour évaluer un flux de courant détecté par l'équipement de mesure de courant (163) dans le conducteur positif (161) ou dans le conducteur négatif (162) de l'appareil de précharge (160) dans le but de détecter un défaut à la terre,
et en cas d'un défaut à la terre détecté du conducteur positif (8') ou du conducteur négatif (10') de l'appareil de coupure de tension continue (100') pour provoquer l'interruption du processus de mise sous tension du dispositif de commutation (400).

10. Dispositif de commutation (400) selon la revendication 9, dans lequel l'équipement de commande et d'évaluation (169) est conçu pour détecter un défaut à la terre du conducteur positif (161) ou du conducteur négatif (162) par le dépassement d'un flux de courant détecté par l'équipement de mesure de courant (163) d'une valeur de référence de sensiblement zéro ampère.

11. Dispositif de commutation (400) selon la revendication 9 ou 10, dans lequel l'équipement de commande et d'évaluation (169) est en outre conçu,
pour provoquer l'interruption du processus de mise sous tension du dispositif de commutation (400) en ce que l'équipement de commande et d'évaluation (169) provoque la mise à l'arrêt électrique du conducteur positif (161) ou du conducteur négatif (162) précédemment mis en marche de l'appareil de précharge (160) dans lequel sont agencés l'équipement de mesure de courant (163) et l'équipement de limitation de courant (164), et/ou
pour provoquer la poursuite du processus de mise sous tension du dispositif de commutation (400) s'il ne détecte pas de défaut à la terre du conducteur positif (161) ou du conducteur négatif (162) en ce que l'équipement de commande et d'évaluation (169)
- tout d'abord, provoque la mise en marche électrique du conducteur positif (161) ou conducteur négatif (162) encore mis à l'arrêt de l'appareil de précharge (160) en parallèle avec le conducteur positif (8') ou conducteur négatif (10') correspondant de l'appareil de coupure de tension continue (100') pour la mise en marche électrique de l'appareil de précharge (160) afin de charger les capacités du côté sortie du dispositif de commutation (400), et
- provoque ensuite la fermeture des commutateurs électromécaniques (108', 110') de l'appareil de coupure de tension continue (100').

12. Appareil de coupure de tension continue (100) selon l'une des revendications 1 à 7 ou dispositif de commutation (400) selon l'une des revendications 9 à 11, dans lequel l'équipement de limitation de courant (104, 164) présente au moins une résistance ohmique ou au moins un convertisseur abaisseur.

13. Procédé de fonctionnement d'un appareil de coupure de tension continue (100) selon l'une des revendications 1 à 7,
dans lequel tout d'abord le premier élément de commutation (101) et les premier et second commutateurs électromécaniques (108, 110) sont respectivement dans un état ouvert et le circuit de précharge (105) est électriquement mis à l'arrêt,
comportant les étapes de :
- application d'une tension continue externe aux bornes d'entrée (IN+, IN-) de l'appareil de coupure de tension continue (100) et connexion électrique de la charge de tension continue (200) aux bornes de sortie (OUT+, OUT-) de l'appareil de coupure de tension continue (100),
- démarrage d'un processus de mise sous tension par
fermeture uniquement du premier commutateur électromécanique (108) de l'appareil de coupure de tension continue (100),
mise en marche électrique ultérieure du circuit de précharge (105),
reconnaissance d'un flux de courant par l'équipement de mesure de courant (116) dans le conducteur positif (8) ou le conducteur négatif (10) respectif dans lequel l'équipement de mesure de courant (116) est agencé,
évaluation du courant détecté pour détecter un défaut à la terre, et
en cas de détection d'un défaut à la terre dans le conducteur positif (8) ou le conducteur négatif (10), interruption du processus de mise sous tension.

14. Procédé selon la revendication 13, dans lequel
le processus de mise sous tension est interrompu par la mise à l'arrêt électrique du circuit de précharge (105) et l'ouverture du premier commutateur électromécanique (108) de l'appareil de coupure de tension continue (100), et/ou
le processus de mise sous tension est poursuivi dans le cas où aucun défaut à la terre du conducteur positif (8) ou du conducteur négatif (10) n'est reconnu, par
mise à l'arrêt électrique du circuit de précharge (105),
fermeture du second commutateur électromécanique (110),
remise en marche électrique du circuit de précharge (105) pour charger les capacités du côté sortie de l'appareil de coupure de tension continue (100), et
enfin, fermeture du premier élément de commutation (101).

15. Procédé de fonctionnement d'un dispositif de commutation (400) selon l'une des revendications 9 à 11,
dans lequel tout d'abord les commutateurs électromécaniques (108', 110') de l'appareil de coupure de tension continue (100') sont respectivement à l'état ouvert et l'appareil de précharge (160) est électriquement mis à l'arrêt,
comportant les étapes de :
- application d'une tension continue externe commune aux bornes d'entrée (IN+, IN-) respectives de l'appareil de coupure de tension continue (100') et de l'appareil de précharge (160) et connexion électrique de la charge de tension continue (200) aux bornes de sortie (OUT+, OUT-) respectives de l'appareil de coupure de tension continue (100') et de l'appareil de précharge (160),
- démarrage d'un processus de mise sous tension par
mise en marche électrique uniquement du conducteur positif (161) ou du conducteur négatif (162) de l'appareil de précharge (160) dans lequel l'équipement de mesure de courant (163) et l'équipement de limitation de courant (164) sont agencés, en parallèle avec le conducteur positif (8') ou le conducteur négatif (10') correspondant de l'appareil de coupure de tension continue (100'),
reconnaissance d'un flux de courant par l'équipement de mesure de courant (163) dans le conducteur positif (161) ou le conducteur négatif (162) respectif de l'appareil de précharge (160), dans lequel l'équipement de mesure de courant (163) est agencé,
évaluation du courant détecté pour détecter un défaut à la terre, et
en cas de détection d'un défaut à la terre dans le conducteur positif (8) ou le conducteur négatif (10) de l'appareil de coupure de tension continue (100'), interruption du processus de mise sous tension.

16. Procédé selon la revendication 15, dans lequel
le processus de mise en marche est interrompu par la mise à l'arrêt électrique du conducteur positif (161) ou du conducteur négatif (162) précédemment mis en marche de l'appareil de précharge (160) dans lequel sont agencés l'équipement de mesure de courant (163) et l'équipement de limitation de courant (164), et/ou
le processus de mise sous tension est poursuivi dans le cas où aucun défaut à la terre du conducteur positif (161) ou du conducteur négatif (162) n'est reconnu, par
mise en marche électrique du conducteur positif (161) ou conducteur négatif (162) encore mis à l'arrêt de l'appareil de précharge (160) en parallèle avec le conducteur positif (8') ou conducteur négatif (10') correspondant de l'appareil de coupure de tension continue (100') pour la mise en marche électrique de l'appareil de précharge (160) et charge des capacités du côté sortie du dispositif de commutation (400), et
fermeture ultérieure des commutateurs électromécaniques (108', 110') de l'appareil de coupure de tension continue (100').

17. Procédé selon la revendication 16, dans lequel
en outre, lorsque le processus de mise sous tension se poursuit, un élément de commutation (101') pouvant être commandé à base de semi-conducteur agencé dans le conducteur positif (8') ou dans le conducteur négatif (10') de l'appareil de coupure de tension continue (100') est fermé.
